(19) Europäisches Patentamt
European Patent Office
Office européen des brevets

(11) **EP 4 693 940 A1**

(12) **EUROPEAN PATENT APPLICATION**
published in accordance with Art. 153(4) EPC

(43) Date of publication:
**11.02.2026 Bulletin 2026/07**

(21) Application number: **24802651.0**

(22) Date of filing: **01.04.2024**

(51) International Patent Classification (IPC):
*H04B 7/06* (2006.01)

(52) Cooperative Patent Classification (CPC):
**H04B 7/0452; H04B 7/06; H04B 17/318;
H04B 17/336; H04B 17/391**

(86) International application number:
**PCT/CN2024/085359**

(87) International publication number:
**WO 2024/230364 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.05.2023 CN 202310498537**

(71) Applicant: **Huawei Technologies Co., Ltd.
Shenzhen, Guangdong 518129 (CN)**

(72) Inventors:
• **RUAN, Wei**
  **Shenzhen, Guangdong 518129 (CN)**
• **LIU, Jinghui**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **ANTENNA CONFIGURATION METHOD AND COMMUNICATION APPARATUS**

(57) Embodiments of this application relate to the field of chip technologies, and provide an antenna configuration method and a communication apparatus, to determine an optimal mapping relationship between an antenna and a channel in a channel-bonded multi-antenna device, thereby improving a throughput of a multi-antenna system. The method includes: respectively transmitting a measurement signal by using a plurality of antenna configuration solutions, where each antenna configuration solution is used to configure a signal transmitted by each of a plurality of antennas, and there is a bonding relationship between signals transmitted by the plurality of antennas; and performing data transmission by using a target antenna configuration solution in which channel measurement information meets an antenna configuration condition in channel measurement information of the plurality of antenna configuration solutions. Embodiments of this application are used in a data transmission process in a channel bonding technology.

A communication device respectively transmits a measurement signal by using a plurality of antenna configuration solutions, where each antenna configuration solution is used to configure a signal transmitted by each of a plurality of antennas, and there is a bonding relationship between signals transmitted by the plurality of antennas — 501

The communication device performs data transmission by using a target antenna configuration solution in which channel measurement information meets an antenna configuration condition in channel measurement information of the plurality of antenna configuration solutions — 502

FIG. 5

## Description

This application claims priority to Chinese Patent Application No. 202310498537.4, filed with the China National Intellectual Property Administration on May 5, 2023 and entitled "ANTENNA CONFIGURATION METHOD AND COMMUNICATION APPARATUS", which is incorporated herein by reference in its entirety.

## TECHNICAL FIELD

This application relates to the field of chip technologies, and in particular, to an antenna configuration method and a communication apparatus.

## BACKGROUND

When a transmit end or a receive end uses a plurality of antennas for data transmission, if there are no idle and contiguous channels in an air interface, two contiguous or non-contiguous channels may be bonded together through channel bonding (channel bonding) for data transmission. For example, when there are no idle and contiguous 160 M channels in the air interface, two idle 80 M channels may be bonded into a 160 M channel for data transmission, to obtain a larger transmission bandwidth and improve a data traffic throughput.

For example, there are two physical antennas at the transmit end or the receive end, and each antenna may transmit or receive a high frequency signal or a low frequency signal. However, a mapping relationship between an antenna and a high frequency signal/low frequency signal is fixed. For example, for the transmit end or the receive end with the two antennas, one antenna is designated to transmit or receive a low frequency signal bonded to a channel, and the other antenna is designated to transmit or receive a high frequency signal bonded to a channel. In this fixed mapping relationship, it means that channel frequency selectivity in a specific environment is fixed. If the high frequency signal and the low frequency signal happen to be at a location with severe fading on the channel in the current mapping relationship, power of a received signal is reduced, and consequently, throughput performance of a multi-antenna system is reduced.

## SUMMARY

Embodiments of this application provide an antenna configuration method and a communication apparatus, to determine an optimal antenna configuration solution between an antenna and a signal transmitted on a bonded channel in a channel-bonded multi-antenna apparatus, thereby improving a throughput of a multi-antenna system.

To achieve the foregoing objective, the following technical solutions are used in embodiments of this application.

According to a first aspect, an antenna configuration method is provided. The method includes: respectively transmitting a measurement signal by using a plurality of antenna configuration solutions, where each antenna configuration solution is used to configure a signal transmitted by each of a plurality of antennas, and there is a bonding relationship between signals transmitted by the plurality of antennas; and performing data transmission by using a target antenna configuration solution in which channel measurement information meets an antenna configuration condition in channel measurement information of the plurality of antenna configuration solutions.

Each antenna configuration solution may be understood as a mapping relationship between the plurality of antennas and a channel bonding signal. Before data transmission is performed by using the target antenna configuration solution, each antenna configuration solution is traversed, to determine an optimal antenna configuration solution based on a channel measurement result corresponding to each antenna configuration solution, or determine an optimal mapping relationship between a plurality of antennas and the channel bonding signal.

For example, for a transmit end corresponding to two antennas, the channel bonding signal includes a bonded high frequency signal and a bonded low frequency signal, and each antenna configuration solution is used to indicate whether the two antennas are respectively used to send the high frequency signal or the low frequency signal.

In this way, in this embodiment of this application, for a multi-antenna system, the plurality of antenna configuration solutions may be traversed, transmission of the measurement signal is performed in the plurality of antenna configuration solutions, and an optimal antenna configuration solution is determined based on channel measurement information in each antenna configuration solution. In the prior art, when an antenna configuration solution of a plurality of antennas and a bonded signal is fixed, if a high frequency signal and a low frequency signal happen to be at a location with severe fading on a channel, power of a received signal is reduced, and consequently, throughput performance of the multi-antenna system is reduced. In comparison with the prior art, in this application, a plurality of antenna configuration solutions may be filtered based on the channel measurement information, to determine an optimal mapping combination between the plurality of antennas and a bonded signal, thereby improving the throughput performance of the multi-antenna system.

In addition, for a multiple-input multiple-output (multiple-input multiple-output, MIMO) system, a space correlation feature of a channel is unchanged in a fixed antenna configuration solution. If the space correlation feature of the channel in the current antenna configuration solution is large, and a degree of similarity between different antennas is high, MIMO receiving performance is reduced. If an optimal antenna configuration solution is determined by traversing the plurality of antenna configuration solutions in this application, the antenna configuration solution in a MIMO scenario can be flexible and variable, and a problem of MIMO receiving performance reduction caused by the large space correlation feature between channels can be avoided.

In a possible design, the measurement signal is a null data packet, and respectively transmitting the measurement signal by using the plurality of antenna configuration solutions includes: sending the null data packet in each of the plurality of antenna configuration solutions, and receiving a channel quality indication sent by a receive end in each antenna configuration solution, where the null data packet is used to indicate the receive end to perform channel measurement; and for each antenna configuration solution, the channel quality indication includes channel measurement information corresponding to each antenna configuration solution. This is equivalent to that a process of determining an optimal target antenna configuration solution is performed at the transmit end. When determining the optimal target antenna configuration solution, the transmit end may transmit a signal based on the optimal target antenna configuration solution in a channel bonding technology, to improve throughput performance of the multi-antenna system.

In a possible design, the measurement signal is a sounding frame, and respectively transmitting the measurement signal by using the plurality of antenna configuration solutions includes: receiving the sounding frame in each of the plurality of antenna configuration solutions, where the sounding frame is used to obtain the channel measurement information. This is equivalent to that a process of determining the optimal antenna configuration solution is performed at the receive end. When determining the mapping relationship between the plurality of antennas and a signal transmitted on the bonded channel, for each antenna configuration solution that is traversed, the receive end may first obtain channel measurement information of the received sounding frame through estimation, and then filter an optimal target antenna configuration solution based on the channel measurement information obtained through estimation, to improve throughput performance of the receive end.

According to a second aspect, a communication apparatus is provided. The communication apparatus includes a transceiver unit, configured to: respectively transmit a measurement signal by using a plurality of antenna configuration solutions, where each antenna configuration solution is used to configure a signal transmitted by each of a plurality of antennas, and there is a bonding relationship between the signals transmitted by the plurality of antennas; and perform data transmission by using a target antenna configuration solution in which channel measurement information meets an antenna configuration condition in channel measurement information of the plurality of antenna configuration solutions.

For beneficial effect of the second aspect, refer to the descriptions of the first aspect.

In a possible design, the measurement signal is a null data packet, and the transceiver unit is configured to: send the null data packet in each of the plurality of antenna configuration solutions, and receive a channel quality indication sent by a receive end in each antenna configuration solution, where the null data packet is used to indicate the receive end to perform channel measurement; and for each antenna configuration solution, the channel quality indication includes channel measurement information corresponding to each antenna configuration solution.

In a possible design, the measurement signal is the null data packet, and the transceiver unit is configured to receive the null data packet in each of the plurality of antenna configuration solutions.

In the first aspect and the second aspect:

in a possible design, the plurality of antennas include a first antenna and a second antenna, the target antenna configuration solution is used to indicate that the first antenna transmits or receives a first signal, and the second antenna transmits or receives a second signal, where a frequency of the first signal is higher than a frequency of the second signal. The first signal and the second signal herein are channel bonding (channel bonding) signals. For example, the channel bonding signal is 80+80 M, the first signal may be a high frequency signal +80 M, and the second signal may be a low frequency signal -80 M. A finally determined antenna configuration solution that meets the antenna configuration condition is used to indicate that the first antenna transmits or receives +80 M, and the second antenna transmits or receives -80 M. In this way, when an antenna configuration solution with good channel quality is filtered from the antenna configuration condition, a throughput of the multi-antenna system can be improved.

If the transmit end performs the antenna configuration method:

In a possible design, the channel measurement information includes measurement information related to a signal-to-noise ratio in a signal bandwidth with a bonding relationship. For example, the signal bandwidth with the bonding relationship is 80+80 M, that is, 160 M, and the channel measurement information includes measurement information related to a signal-to-noise ratio in the 160 M bandwidth. In this case, the measurement information related to the signal-to-noise ratio in the 160 M bandwidth fed back by the receive end may be fed back by using two antennas of the signal with the bonding relationship, or may be fed back by using one of the two antennas. This is not limited in this application. In this way, the transmit end may filter an antenna configuration solution based on the channel measurement information, to obtain the optimal antenna configuration solution for data transmission, thereby improving throughput performance of the multi-antenna system.

In a possible design, for each antenna configuration solution, the channel measurement information includes an average signal-to-noise ratio corresponding to each space-time stream sent in each subband in the signal bandwidth with the bonding relationship, and for each space-time stream in any subband, the average signal-to-noise ratio corresponding to each space-time stream is an average value of signal-to-noise ratios of each space-time stream sent on a plurality of carriers in any subband. For example, in a Wi-Fi system, the channel measurement information may be understood as channel quality indication (channel quality indication, CQI). For example, the CQI may include an average signal-to-noise ratio of each space-time stream transmitted on each subband in a 160+160 M signal bandwidth of a bonded channel. For example, a single channel with a bandwidth of 160 M includes 1992 subcarriers, and each subband includes one resource unit (resource unit, RU) including 26 subcarriers. Each subband corresponds to approximately 2 M bandwidth. A plurality of space-time streams may be transmitted on each subcarrier. Each space-time stream on each subcarrier in each subband may correspond to one signal-to-noise ratio. When each space-time stream is transmitted on 26 subcarriers, each space-time stream corresponds to one average signal-to-noise ratio.

In a possible design, the target antenna configuration solution is determined based on a minimum average signal-to-noise ratio in average signal-to-noise ratios respectively corresponding to a plurality of space-time streams sent on the plurality of subbands, and an average value of the average signal-to-noise ratios respectively corresponding to the plurality of space-time streams sent on the plurality of subbands in each of the plurality of antenna configuration solutions. A larger signal-to-noise ratio value may indicate better signal quality, and is more favorable for the receive end to perform data demodulation. For example, a filtering condition may be preconfigured in the transmit end. A target antenna configuration solution that meets the antenna configuration condition is used as a final antenna configuration solution based on whether the minimum average signal-to-noise ratio and the average value of the average signal-to-noise ratios that are corresponding to each antenna configuration solution and that are obtained through calculation meet the filtering condition.

If the receive end performs the antenna configuration method:

in a possible design, the channel measurement information includes measurement information related to at least one of a signal-to-noise ratio, a received signal strength, or an error vector magnitude. That is, the signal-to-noise ratio, the received signal strength, or the error vector magnitude may reflect channel quality in a current antenna configuration solution, so that the receive end determines a target antenna configuration solution with optimal channel quality, thereby improving throughput performance of the receive end.

In a possible design, for each antenna configuration solution, the channel measurement information includes at least one of a signal-to-noise ratio corresponding to each of a plurality of space-time streams received by the plurality of antennas, a received signal strength of each of the plurality of antennas, and an error vector magnitude corresponding to each space-time stream on each subcarrier in each of a plurality of symbols of the received sounding frame. A larger signal-to-noise ratio value may indicate better signal quality, and is more favorable for the receive end to perform data demodulation. A higher received signal strength indicates better signal quality, and is more favorable for the receive end to perform data demodulation. The error vector magnitude represents a distance between a data demodulation vector result and a theoretical constellation point, and is an important indicator for measuring a data demodulation capability. A smaller error vector magnitude indicates better signal quality, and is more favorable for the receive end to perform data demodulation.

In a possible design, the target antenna configuration solution is determined based on a minimum signal-to-noise ratio in signal-to-noise ratios respectively corresponding to the plurality of space-time streams received by the plurality of antennas and an average value (a total average signal-to-noise ratio) of the signal-to-noise ratios respectively corresponding to the plurality of space-time streams received by the plurality of antennas in each antenna configuration solution that are obtained based on the received sounding frame in each of the plurality of antenna configuration solutions. In this way, when the target antenna configuration solution is determined based on the minimum signal-to-noise ratio and the total average signal-to-noise ratio, a mapping combination with better signal quality and more favorable for the receive end to perform data demodulation can be determined, to improve system receive performance.

In a possible design, the target antenna configuration solution is determined based on a minimum received signal strength in received signal strengths respectively corresponding to the plurality of antennas and an average value of the received signal strengths respectively corresponding to the plurality of antennas in each antenna configuration solution that are obtained based on the received sounding frame in each of the plurality of antenna configuration solutions. In this way, when the optimal mapping combination is determined based on the received signal strength, a mapping combination with a maximum received signal strength can be determined, to improve system receive performance.

In a possible design, the target antenna configuration solution is determined based on a maximum error vector magnitude in error vector magnitudes respectively corresponding to a plurality of space-time streams respectively corresponding to a plurality of subcarriers in the plurality of symbols and an average value of the error vector magnitudes respectively corresponding to the plurality of space-time streams in each antenna configuration solution that are obtained based on the received sounding frame in each antenna configuration solution in a plurality of mapping relationships. In this way, based on each antenna configuration solution, a target antenna configuration solution that is with better signal quality

EP 4 693 940 A1

and is more conducive to data demodulation performed by the receive end may be determined based on the error vector magnitude. This improves system receiving performance.

According to a third aspect, a communication apparatus is provided. The communication apparatus includes a plurality of antennas, a transceiver, and a processor. The plurality of antennas and the transceiver are coupled to the processor. The processor is configured to control the transceiver to perform the method according to any one of the first aspect or the possible implementations of the first aspect through the plurality of antennas.

According to a fourth aspect, a chip is provided. The chip is coupled to a memory, and is configured to read and execute program instructions that are stored in the memory, to implement the method according to the first aspect or any one of the first aspect.

According to a fifth aspect, an embodiment of this application provides a communication apparatus. The apparatus is included in an electronic device, and the apparatus has a function of implementing behavior of the electronic device in any one of the foregoing aspects or the possible implementations. The function may be implemented by hardware, or may be implemented by hardware executing corresponding software. The hardware or the software includes one or more modules or units corresponding to the function, for example, a transceiver module or unit.

According to a sixth aspect, an embodiment of this application provides an electronic device, including an antenna, one or more processors, and one or more memories. The one or more memories are coupled to the one or more processors. The one or more memories are configured to store computer program code. The computer program code includes computer instructions. When the one or more processors execute the computer instructions, the electronic device is enabled to perform the antenna configuration method in the first aspect and any possible implementation of the first aspect.

According to a seventh aspect, an embodiment of this application provides a computer-readable storage medium, including computer instructions. When the computer instructions are run on an electronic device, the electronic device is enabled to perform the antenna configuration method in the first aspect and any possible implementation of the first aspect.

According to an eighth aspect, an embodiment of this application provides a computer program product. When the computer program product runs on a computer or a processor, the computer or the processor is enabled to perform the antenna configuration method in any one of the foregoing aspects and the possible implementations.

According to a ninth aspect, a chip system is provided. The chip system is applied to the communication apparatus according to any one of the second aspect and the possible implementations of the second aspect. The chip system includes one or more interface circuits and one or more processors. The interface circuit and the processor are interconnected through a line. The processor receives computer instructions from the processor of the communication apparatus through the interface circuit and executes the computer instructions.

It may be understood that the foregoing provided communication apparatus, electronic device, chip, chip system, computer-readable storage medium, or computer program product may be applied to the corresponding method provided above. Therefore, for beneficial effect that can be achieved by the foregoing provided communication apparatus, electronic device, chip, chip system, computer-readable storage medium, or computer program product, refer to beneficial effect in the corresponding method. Details are not described herein again.

These aspects or other aspects in this application are more concise and comprehensible in the following descriptions.

## BRIEF DESCRIPTION OF DRAWINGS

FIG. 1(a) to FIG. 1(d) are a diagram of a communication process between a (HE) beamformee and a (HE) beamformer according to an embodiment of this application;
FIG. 2 is a diagram of 80+80 M channel bonding according to an embodiment of this application;
FIG. 3 is a diagram of a communication system in a Wi-Fi scenario according to an embodiment of this application;
FIG. 4 is a diagram of a transceiver antenna bonded to a channel according to an embodiment of this application;
FIG. 5 is a schematic flowchart of an antenna configuration method according to an embodiment of this application;
FIG. 6 is a diagram of a two-antenna multi-antenna system according to an embodiment of this application;
FIG. 7 is a diagram of an antenna configuration solution of a receive end according to an embodiment of this application;
FIG. 8 is a diagram of a structure of a transmit end/receive end according to an embodiment of this application;
FIG. 9 is a diagram of traversing antenna configuration solutions between a two-antenna transmit end and signals transmitted on a bonded channel according to an embodiment of this application;
FIG. 10 is a diagram of traversing antenna configuration solutions between a two-antenna receive end and signals transmitted on a bonded channel according to an embodiment of this application;

FIG. 11 is a diagram of traversing antenna configuration solutions between a four-antenna transmit end and signals transmitted on a bonded channel according to an embodiment of this application;

FIG. 12 is a diagram of traversing antenna configuration solutions between a four-antenna receive end and signals transmitted on a bonded channel according to an embodiment of this application;

FIG. 13 is a diagram of traversing antenna configuration solutions between a two-antenna transmit end and signals transmitted on a bonded channel according to an embodiment of this application;

FIG. 14 is a diagram of traversing antenna configuration solutions between a two-antenna receive end and signals transmitted on a bonded channel according to an embodiment of this application;

FIG. 15 is a diagram of traversing antenna configuration solutions between a four-antenna transmit end and signals transmitted on a bonded channel according to an embodiment of this application;

FIG. 16 is a diagram of traversing antenna configuration solutions between a four-antenna receive end and signals transmitted on a bonded channel according to an embodiment of this application;

FIG. 17 is a diagram of a structure of a communication device according to an embodiment of this application; and

FIG. 18 is a diagram of a structure of a communication device according to an embodiment of this application.

## DESCRIPTION OF EMBODIMENTS

For ease of understanding, some concepts related to embodiments of this application are described for reference by using examples. Details are as follows:

Orthogonal frequency division multiplexing (orthogonal frequency division multiplexing, OFDM) is a type of multi-carrier modulation (multi carrier modulation, MCM). OFDM is one of multi-carrier transmission solutions. Modulation and demodulation of OFDM are respectively implemented based on inverse fast Fourier transform (inverse fast Fourier transform, IFFT) and fast Fourier transform (fast Fourier transform, FFT). OFDM is a multi-carrier transmission solution with the lowest implementation complexity and the widest application. In a communication system, a bandwidth that can be provided by a channel is usually much wider than a bandwidth required for transmitting one signal. OFDM can be widely used only if OFDM can make full use of the channel bandwidth.

A main idea of the OFDM technology is to divide a channel into several orthogonal subchannels, convert a high speed data signal into parallel low speed sub-data streams, and modulate the parallel low speed sub-data streams to the subchannels for transmission. At a receive end, a related technology may also be used to separate orthogonal signals, to reduce inter symbol interference (inter symbol interference, ISI) between the subchannels. A signal bandwidth on each subchannel is less than a correlation bandwidth of an original channel. Therefore, flat fading may be considered on each subchannel, and inter symbol interference may be eliminated. In addition, because the bandwidth of each subchannel is only a small part of the bandwidth of the original channel, channel equalization becomes easy.

A multiple-input multiple-output (multiple-input multiple-output, MIMO) system uses a plurality of transmit antennas and a plurality of receive antennas. Because a plurality of groups of antennas are used, a radio signal from a transmit end to a receive end corresponds to a spatial stream (spatial streams) that is transmitted through a plurality of paths. At the receive end, a specific algorithm may be used to process signals received by a plurality of antennas, to significantly improve a signal-to-noise ratio of the receive end. Even when the receive end is far away from the transmit end, the receive end can obtain good signal quality. The MIMO system can greatly improve a channel capacity and has high spectrum utilization efficiency.

Beamforming (beamforming, BF) is a concept derived from an adaptive antenna. Signal processing at the receive end may be performed by weighting and synthesizing signals received by an antenna array, to form an ideal signal required. From a perspective of an antenna pattern (pattern), it is equivalent to describing that a beam in a specified direction is formed. Beamforming converts an omnidirectional receive pattern into a lobe pattern with a zero point and a maximum direction. In comparison with a conventional antenna array, beamforming has advantages such as propagation in a specific direction, energy concentration, and low interference.

Beamforming usually obtains a weight matrix, and the matrix is used to align a "beam" with a user. A Wi-Fi system is used as an example. An implementation process of a beamforming function is that a beamformer sends a sounding (sounding) frame, to trigger a beamformee to feed back the weight matrix to the beamformer. The beamformer then calculates a precoding (precoding) matrix by using the fed-back weight matrix, to perform beamforming. The beamformer may be understood as a beamforming transmit end, and is a party that sends the sounding frame and performs precoding, or a party that is ready to perform beamforming adjustment. The beamformee may be understood as a beamforming receive end, and is a party that receives the sounding frame and feeds back the weight matrix, or a party that assists the transmit end in performing beamforming. In the Wi-Fi system, for example, the beamformer may be an access point (access point, AP) in Wi-Fi, and the beamformee is a terminal device, or the beamformer may be a terminal device, and the beamformee is an AP.

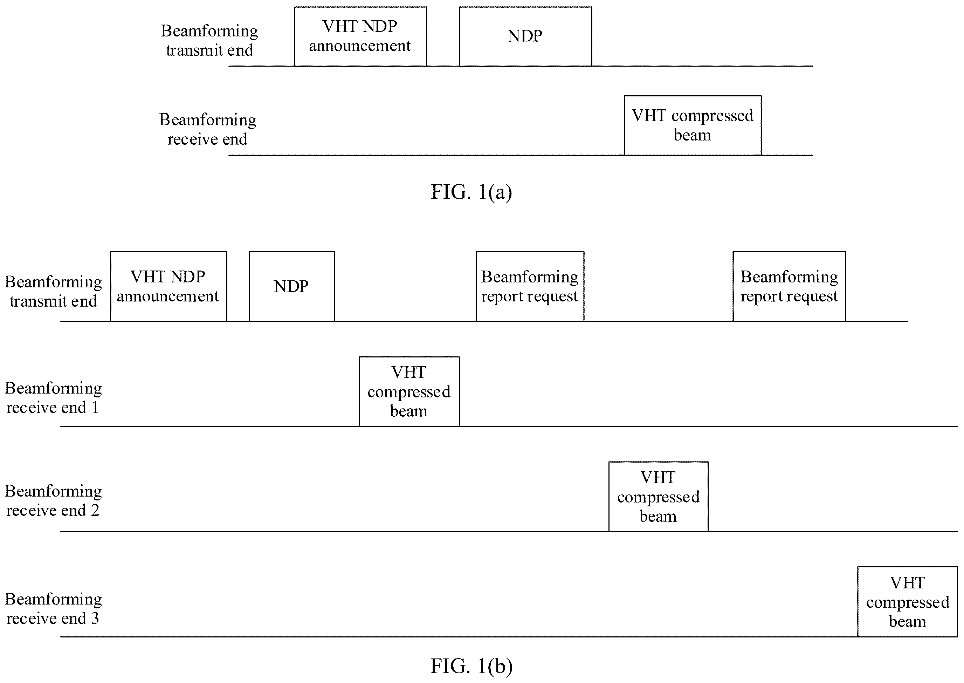

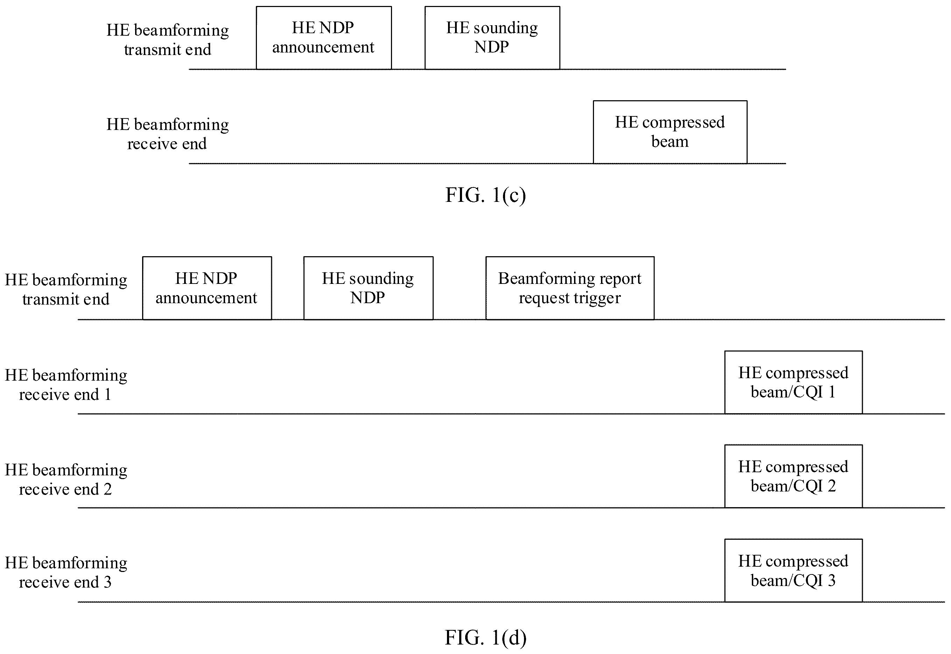

(a) in FIG. 1 is a diagram of a process of sending a sounding frame in a very high throughput (very high throughput, VHT) format and sending a weight matrix in a single-user feedback manner in an Institute of Electrical and Electronics Engineers (institute of electrical and electronics engineers, IEEE) 802.11 ac protocol. The beamforming transmit end may first send a VHT null data packet (null data packet, NDP) announcement (announcement) to the beamforming receive end, to notify the beamforming receive end that the beamforming transmit end is to send the sounding frame used for beamforming. Then, after a short interframe space (short interframe space, SIFS), the beamforming transmit end may send the sounding frame to the beamforming receive end, for example, send an NDP, and receive a frame of VHT compressed beam (compressed beamforming) fed back by the beamforming receive end, where the frame carries the weight matrix. After calculating a precoding matrix based on the received weight matrix, the beamforming transmit end sends a beam to the beamforming receive end based on the precoding matrix.

(b) in FIG. 1 is a diagram of a process of sending a sounding frame in a VHT format and sending a weight matrix in a multi-user feedback manner in an Institute of Electrical and Electronics Engineers (institute of electrical and electronics engineers, IEEE) 802.11ac protocol. A beamforming transmit end may first send the VHT NDP announcement to a plurality of users, that is, a beamforming receive end 1, a beamforming receive end 2, and a beamforming receive end 3 shown in FIG. 1(a) to FIG. 1(d), to notify the plurality of users that the beamforming transmit end is to send a sounding frame for user beamforming. Then, after a short interframe space (short interframe space, SIFS), the beamforming transmit end may first send the sounding frame to the beamforming receive end 1, for example, send an NDP, and receive a frame of VHT compressed beam (compressed beamforming) fed back by the beamforming receive end 1, where the frame carries a weight matrix. After calculating a precoding matrix based on the received weight matrix, the beamforming transmit end sends a beam to the beamforming receive end 1 based on the precoding matrix. Similarly, the beamforming transmit end may separately send a beamforming report poll (beamforming report poll) to the beamforming receive end 2, calculate a precoding matrix based on the weight matrix carried in VHT compressed beamforming fed back by the beamforming receive end 2, and then separately send beams to the beamforming receive end 2. Processes of the beamforming transmit end and the beamforming receive end 3 are similar to processes of the beamforming transmit end and the beamforming receive end 2.

The NDP is a data packet without data, and is a frame that includes only a preamble. The frame is the sounding frame described above. The frame is not intended to demodulate a data field by the beamforming receive end, but is intended to measure a channel by using the preamble to obtain a channel matrix.

Specifically, for the beamforming receive end, a working procedure of the beamforming receive end may be as follows: A channel estimation (channel estimation, CHE) module of the beamforming receive end performs channel estimation by using a long training field (long training field, LTF) carried in the sounding frame, to obtain a channel matrix H, and then a singular value decomposition (singular value decomposition, SVD) module decomposes the channel matrix H output by the channel estimation module, to obtain a to-be-fed-back weight matrix. The procedure may be described by using a formula (1).

$$\mathrm{SVD}(H_{m \times n}) = U_{m \times m} \sum\nolimits_{m \times n} V'_{n \times n} \qquad\qquad \text{formula (1)}$$

$U_{m \times m}$ and $V_{n \times n}$ indicate unitary matrices, $\sum_{m \times n}()$ is a diagonal matrix (only a main diagonal line has a value, and other elements are all 0), and $V'_{n \times n}$ indicates the weight matrix output by the SVD module.

The beamforming transmit end precodes the received weight matrix, may multiply an obtained precoding matrix by to-be-sent data, and then output the precoding matrix to an IFFT module. The IFFT module converts a frequency domain signal into a time domain signal, and then sends the time domain signal.

For a terminal (station, STA) that does not support a beamforming function, a weight matrix of a target STA that is used as a receive end may also be obtained by using legacy transmit beamforming (legacy transmit beamforming, Legacy TxBF). In the Legacy TxBF algorithm, the STA can calculate, based on the uplink channel estimation result, the weight matrix of the target STA in the beamforming function by replacing the downlink channel with the uplink channel and the AP side channel calibration factor based on the theoretical transposition relationship between the uplink and downlink channels, to implement an equivalent downlink beamforming function.

Specifically, a processing procedure of Legacy TxBF may be as follows: A channel estimation module of the STA outputs an estimation result of an uplink channel, and then a channel estimation calibration module obtains an approximate downlink channel matrix based on the estimation result. A calculation formula of the channel estimation calibration module may be a formula (2).

$$H_{DL} = H_{UL} * \begin{bmatrix} \beta_1 & 0 & 0 & 0 \\ 0 & \beta_2 & 0 & 0 \\ 0 & 0 & \beta_3 & 0 \\ 0 & 0 & 0 & \beta_4 \end{bmatrix} \qquad \text{formula (2).}$$

Herein, $H_{UL}$ represents channel estimation of the uplink channel output by the channel estimation module, $H_{DL}$ is an approximately obtained downlink channel matrix, and $\beta_1$ to $\beta_4$ are correction factors of channels. After obtaining $H_{DL}$, the STA may further obtain a weight matrix by using an SVD module.

(c) in FIG. 1 is a diagram of a process of using a high efficiency (high efficiency, HE) format sounding frame and a single-user feedback HE compressed beam (compressed beamforming) in a beamforming process. An HE beamforming (HE beamformer) transmit end may first send an HE NDP announcement to an HE beamforming receive end, to notify the HE beamforming receive end that the HE beamforming transmit end is to send an HE beamforming sounding frame. Then, after an SIFS, the HE beamforming transmit end may send an HE sounding (sounding) NDP to the HE beamforming receive end, to instruct the HE beamforming receive end to feed back a frame of an HE compressed beam. Then, the HE beamforming transmit end receives the frame of the HE compressed beam fed back by the HE beamforming receive end. The frame of the HE compressed beam carries a channel quality indication (channel quality indication, CQI). After performing channel estimation based on the CQI, the HE beamforming transmit end sends a beam to the HE beamforming receive end.

(d) in FIG. 1 is a diagram of a process of using an HE format sounding frame and a multi-user feedback HE compressed beam in a beamforming process. An HE beamforming transmit end may first send an HE NDP announcement to a plurality of users, that is, an HE beamforming receive end 1, an HE beamforming receive end 2, and an HE beamforming receive end 3 shown in (d) in FIG. 1, to notify the plurality of users that the HE beamforming transmit end is to send a sounding frame of user beamforming. Then, after an SIFS, the HE beamforming transmit end may first send an HE sounding (sounding) NDP to the plurality of HE beamforming receive ends, to instruct the plurality of HE beamforming receive ends to feed back frames of HE compressed beams. Then, the HE beamforming transmit end may send a beamforming report (beamforming report Poll) trigger (trigger) indication to the plurality of HE beamforming receive ends, and receive the frames of the HE compressed beams (compressed beamforming) fed back by the plurality of HE beamforming receive ends. The frame of the HE compressed beam carries a CQI. After separately performing channel estimation based on received CQIs sent by the plurality of HE beamforming receive ends, the HE beamforming transmit end respectively transmits beams to the plurality of HE beamforming receive ends.

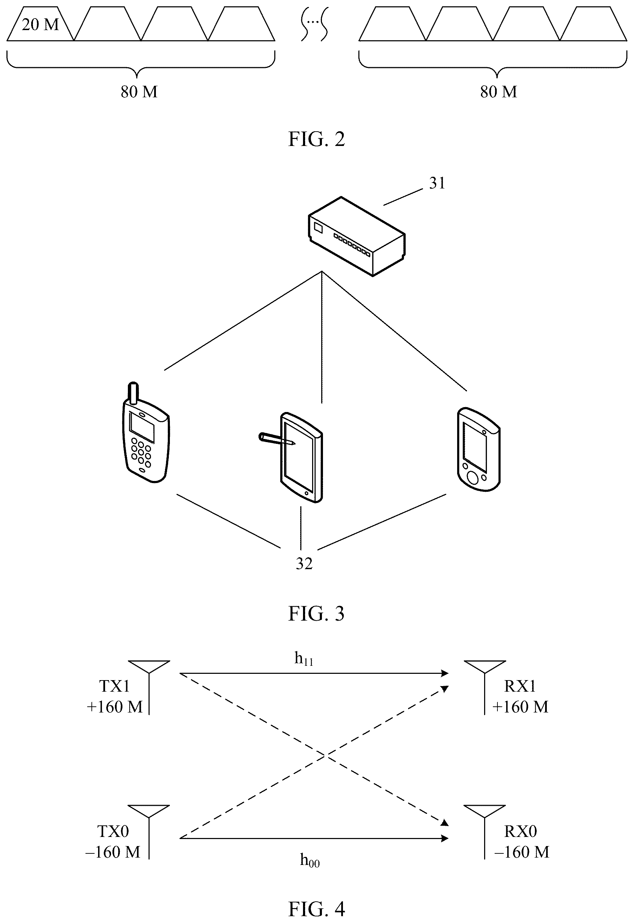

Channel bonding (channel bonding) may also be referred to as channel combination, and is to bundle two or more contiguous or non-contiguous channels together for data transmission. The concept of channel bonding is mentioned in the 802.11ac/ax/be protocol, for example, 80+80 M channel bonding. FIG. 2 is a diagram of 80+80 M channel bonding. When there are no contiguous 160 M channels in an air interface, two idle 80 M channels (which may include four 20 M subchannels) may be combined to form a 160 M channel for data transmission, to achieve a larger traffic throughput. For example, for a Wi-Fi system, a bonding 80+80 M policy may be used to obtain a 160 M channel, or a bonding 160+160 M policy may be used to obtain a 320 M channel, to improve flexibility and compatibility of a transceiver.

Channel spatial correlation: A value of channel spatial correlation is mainly related to two factors. One is an antenna form, that is, a distance between antenna array elements, and the other is a size of azimuth spread (azimuth spread, AS). A smaller distance between the antenna array elements indicates stronger spatial correlation, and a larger distance indicates weaker spatial correlation. At a same antenna spacing, smaller azimuth spread indicates stronger spatial correlation, and larger azimuth spread indicates weaker spatial correlation. The azimuth spread is used to describe spatial selective fading, and is related to a local scatterer and a remote scatterer around a transmit antenna and a receive antenna, and is related to a power azimuth spectrum (power azimuth spectrum, PAS). The azimuth spread describes a dispersion degree of a power spectrum in space, and is distributed in [0, 360] based on different environments. Larger azimuth spread indicates a stronger scattering environment. In contrast, smaller azimuth spread indicates a weaker scattering environment, and lower dispersion of a signal in space. When antenna angles of arrival are the same, larger angle spread indicates a lower correlation between signals received by different antennas.

When a mapping relationship between fixed antennas and high and low channels is fixed, it means that a channel space correlation feature in a specific environment is fixed. Generally, if a channel correlation feature in a current mapping relationship is large, single-input multiple-output (single-input multiple-output, SIMO) multiple-antenna combined reception is beneficial, but MIMO reception performance is affected. This is because implementation of a large capacity of a MIMO system, improvement of other system performance, and performance of various signal processing algorithms used in the MIMO system greatly depend on a feature of a MIMO channel, especially a correlation between antennas/channels, and the MIMO system needs low correlation between channels.

Frequency selectivity of a channel is an important feature of a fading channel. If all spectrum components of a sent signal experience the same fading, it may be considered that the channel is frequency non-selective or flat fading. If spectrum components of a sent signal are affected by different magnitude gains and phase shifts, that is, experience different fading, it may be considered that the channel is frequency selective. For frequency selectivity, multipath effect of a wireless channel causes frequency selective fading. That is, if a relative delay of a plurality of signals cannot be ignored compared with time of one symbol, when the plurality of signals are superposed, symbols at different times overlap each other. This causes inter symbol interference. This fading is referred to as frequency selective fading, and a frequency response of this channel is not flat in an entire used frequency band.

Channel reciprocity means that uplink and downlink links are transmitted in different timeslots on a same frequency resource. Therefore, in short time (channel propagation coherence time), it may be considered that channel fading experienced by transmission signals of an uplink link and a downlink link is the same.

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

Embodiments of this application may be applied to a communication scenario in which a Wi-Fi protocol is used, or may be applied to another protocol in which a MIMO technology and channel bonding are used. The technical solutions provided in this application may be further applied to a future communication system. This is not limited in this application.

FIG. 3 is a diagram of a communication system in a Wi-Fi scenario. Wi-Fi may also be referred to as a "wireless hotspot" or a "wireless network", and is a wireless local area network technology based on the IEEE 802.11 standard. The communication system may include a network device 31 and a plurality of terminals 32. For example, the network device 31 is an AP, and the terminal 32 is a STA. One AP may serve a plurality of STAs at the same time, and the AP fully utilizes spatial domain resources of an antenna to communicate with the plurality of STAs at the same time. The AP may be a multi-antenna device having two antennas, four antennas, six antennas, or the like, and the STA is a multi-antenna device having two antennas. Certainly, the STA may alternatively be a device having more than two antennas.

The STA having a Wi-Fi function is, for example, a terminal device. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device with a wireless connection function. Currently, examples of some terminal devices may be: a mobile phone (mobile phone), a tablet computer (pad), a computer (for example, a laptop or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile communication network (public land mobile network, PLMN), or the like.

In addition, the terminal device may be a terminal device in an internet of things (internet of things, IoT) system.

The AP may be one or more (interconnected) APs. A coverage area of a Wi-Fi network formed by the APs depends on an overlapping range of the APs, and the coverage area may range from a plurality of rooms to several square miles. To adapt to new service applications and reduce a gap with wired network bandwidth, in six generations of Wi-Fi systems (802.11, 802.11b, 802.11a/g, 802.11n, 802.11ac, and 802.11ax) that have been developed and popularized, each generation of IEEE 802.11 standards greatly improves a rate and spectrum utilization.

In a scenario in which Wi-Fi uses channel bonding (channel bonding), for example, when the AP is used as a transmit end, the STA may be used as a receive end. When the STA is used as a transmit end, the AP is used as a receive end. If both the AP and the STA are multi-antenna devices, and each of physical antennas of the AP and the STA is two, for example, channel bonding is 160+160 M, each antenna of the AP and the STA may transmit or receive a high frequency channel signal 160 M or a low frequency channel signal -160 M in 160+160 M. For example, an antenna 0 of the AP or the STA transmits or receives a low frequency 160 M signal of a 320 M signal, and an antenna 1 of the AP or the STA transmits or receives a high frequency 160 M signal of the 320 M signal. Certainly, in an actual scenario, there may be four antennas at the transmit end and the receive end. Two antennas are used to transmit or receive a high frequency channel signal, and the other two antennas are used to transmit or receive a low frequency channel signal. By analogy, there may be more than four antennas at the transmit end and the receive end.

Usually, when a mapping combination of antennas and channels of one AP and one STA is determined, signal transmission and reception may be fixedly performed in the mapping combination. FIG. 4 is a diagram of a transceiver antenna bonded to a channel. 160+160 M channel bonding is used as an example. A transmit (transport, TX) antenna TX0 of a transmit end shown in FIG. 4 sends a low frequency -160 M signal to a receive (receive, RX) antenna RX0 of a receive end through a channel h00, and a transmit antenna TX1 of the transmit end sends a high frequency +160 M signal to a receive antenna RX1 of the receive end through a channel h11. hij represents a channel from a $j^{th}$ transmit antenna to an $i^{th}$ receive antenna, and i and j are integers.

When there are four or more antennas at the transmit end and/or the receive end, a fixed mapping relationship between the antennas and a high frequency signal and a low frequency signal means that a channel spatial feature is fixed in a specific environment. If channel correlation features in a current mapping relationship are large, the fixed mapping relationship cannot cover all transmission scenarios, and MIMO receive performance is poor.

In addition, the fixed mapping relationship between the antennas and the high frequency signal and the low frequency signal means that channel frequency selectivity is fixed in a specific environment. If both the high frequency signal and the low frequency signal happen to be at a location with severe fading on a channel in the current mapping relationship, power of a received signal is reduced, and receive performance of the receive end is reduced.

Therefore, an embodiment of this application provides an antenna configuration method. In the method, an antenna configuration solution of signals transmitted on a bonded channel and a plurality of antennas may be traversed, to search for a target antenna configuration solution, that is, an optimal mapping relationship between an antenna and a signal transmitted on a bonded channel, to improve throughput performance of a multi-antenna system. In other words, when the mapping relationship between the antenna and the signal transmitted on the bonded channel in a multi-antenna system is dynamically changed, performance of the multi-antenna system can be improved.

The following describes embodiments of this application.

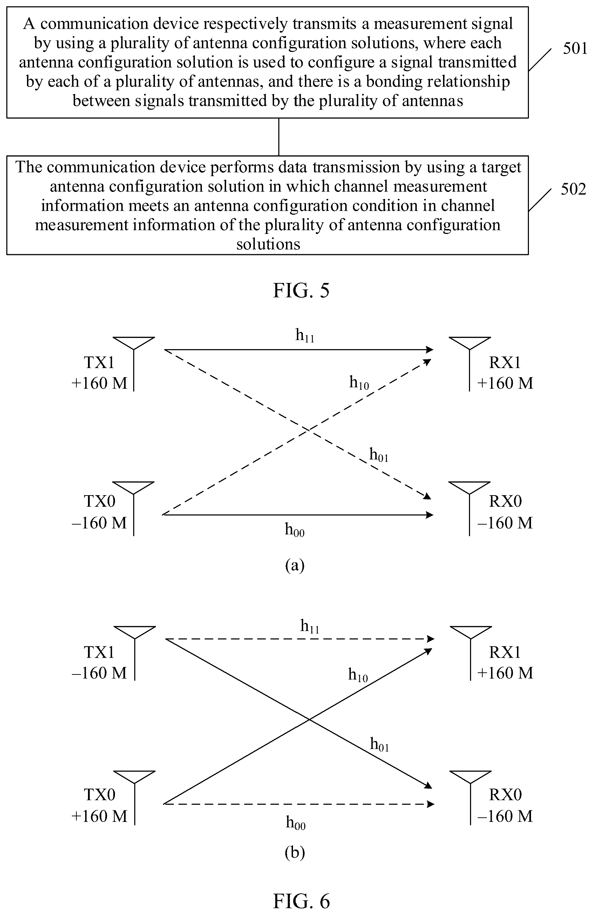

FIG. 5 is a diagram of an antenna mapping method according to an embodiment of this application. The method includes the following procedure.

501: A communication device respectively transmits a measurement signal by using a plurality of antenna configuration solutions, where each antenna configuration solution is used to configure a signal transmitted by each of a plurality of antennas, and there is a bonding relationship between signals transmitted by the plurality of antennas.

Each antenna configuration solution may also be understood as a mapping relationship between the plurality of antennas and signals transmitted on a bonded channel. In other words, the communication device respectively transmits the signal in a plurality of mapping relationships between the plurality of antennas and the signals transmitted on the bonded channel.

In some embodiments, the communication device may be a transmit end or a receive end. For example, in a Wi-Fi scenario, the transmit end is an AP, and the receive end is a STA; or the transmit end is a STA, and the receive end is an AP.

In some embodiments, the measurement signal is a null data packet, and respectively transmitting the measurement signal by using the plurality of antenna configuration solutions includes: sending the null data packet in each of the plurality of antenna configuration solutions, and receiving a channel quality indication sent by the receive end in each antenna configuration solution.

The null data packet is used to indicate the receive end to perform channel measurement.

For each antenna configuration solution, the channel quality indication includes channel measurement information corresponding to each antenna configuration solution.

In this case, the communication device may be understood as the transmit end. In other words, the transmit end traverses antenna configuration solutions between the plurality of antennas and signals with the bonding relationship.

In some embodiments, the channel measurement information includes measurement information related to a signal-to-noise ratio (signal-to-noise ratio, SNR) in a signal bandwidth with the bonding relationship.

In some embodiments, for each antenna configuration solution, the channel measurement information includes an average (average) signal-to-noise ratio corresponding to each space-time stream (space-time stream) sent in each subband in the signal bandwidth with the bonding relationship, and for each space-time stream in any subband, the average signal-to-noise ratio corresponding to each space-time stream is an average value of signal-to-noise ratios of each space-time stream sent on a plurality of carriers in any subband.

For example, in a Wi-Fi scenario, refer to (c) or (d) in FIG. 1. A single receive end is used as an example. The transmit end may be used as an HE beamformer, traverse antenna configuration solutions between a plurality of transmit antennas and signals transmitted on a bonded channel, initiate an HE sounding frame NDP to a receive end used as an HE beamformee, and receive HE compressed beamforming sent by the receive end in each antenna configuration solution.

HE compressed beamforming may be understood as the channel measurement information. For example, the channel measurement information is a CQI.

For each antenna configuration solution that is traversed, the CQI includes an average signal-to-noise ratio corresponding to each space-time stream transmitted in each subband of a plurality of channels in a bandwidth of the bonded channel in each antenna configuration solution.

The method procedure in this application is also applicable to the communication scenarios shown in (a) and (b) in FIG. 1.

For example, as shown in FIG. 4, the transmit end and the receive end are respectively two-antenna multi-antenna systems. There are two antenna configuration solutions between antennas of the transmit end and signals transmitted on a bonded channel. Optionally, for a four-antenna multi-antenna system, there are six antenna configuration solutions between antennas of the transmit end and signals transmitted on a bonded channel. The two-antenna multi-antenna system is used as an example for description.

Refer to a diagram of a two-antenna multi-antenna system shown in FIG. 6. It is assumed that a bandwidth of a bonded channel is 160+160 M, and there are two antenna configuration solutions between transmit antennas TX0 and TX1 of a transmit end and a high frequency signal and a low frequency signal. For example, as shown in (a) in FIG. 6, a transmit antenna TX0 of a transmit end sends a low frequency -160 M signal, a receive antenna RX0 of a receive end receives the low frequency -160 M signal, and a transmission channel between the transmit antenna TX0 and the receive antenna RX0 is denoted as h00. A transmit antenna TX1 sends a high frequency +160 M signal, a receive antenna RX1 of the receive end receives the high frequency +160 M signal, and a transmission channel between the transmit antenna TX1 and the receive antenna RX1 is denoted as a channel h11. Then, the transmit end receives channel measurement information fed back by the receive end. For example, the channel measurement information is denoted as CQI1. If the multi-antenna system shown in FIG. 6 is a MIMO system, although the transmit antenna TX1 may send a high frequency +160 M signal through a channel h01, the receive antenna RX0 cannot receive the high frequency +160 M signal. Similarly, although the transmit antenna TX0 also sends a low frequency -160 M signal through a channel h10, the receive antenna RX1 cannot receive the low frequency -160 M signal. In this case, a transmission manner in which channel bonding is used in the MIMO system is equivalent to a single input single output (simple input simple output, SISO) multi-antenna system.

Then, as shown in (b) in FIG. 6, the transmit end may switch an antenna configuration solution. The transmit antenna TX0 of the transmit end sends a high frequency +160 M signal, the receive antenna RX1 of the receive end receives the high frequency +160 M signal, and a transmission channel between the transmit antenna TX0 and the receive antenna RX1 is denoted as h10. The transmit antenna TX1 sends a low frequency -160 M signal, the receive antenna RX0 of the receive end receives the low frequency -160 M signal, and a transmission channel between the transmit antenna TX1 and the receive antenna RX0 is denoted as h01. Then, the transmit end receives channel measurement information fed back by the receive end. For example, the channel measurement information is denoted as CQI2. Similar to the foregoing description, in a MIMO system, a transmission manner in which channel bonding is used in the MIMO system is equivalent to an SISO multi-antenna system.

The CQI1 is used as an example. The CQI1 may include an average signal-to-noise ratio of each space-time stream transmitted in each subband in a signal bandwidth of 160+160 M transmitted through channel bonding. For example, a single channel with a bandwidth of 160 M includes 1992 subcarriers, and each subband includes one resource unit (resource unit, RU) including 26 subcarriers. Each subband corresponds to approximately 2 M bandwidth. A plurality of space-time streams may be transmitted on each subcarrier. Each space-time stream on each subcarrier in each subband may correspond to one signal-to-noise ratio. When each space-time stream is transmitted on 26 subcarriers, each space-time stream corresponds to one average signal-to-noise ratio.

502: The communication device performs data transmission by using a target antenna configuration solution in which channel measurement information meets an antenna configuration condition in channel measurement information of the plurality of antenna configuration solutions.

In other words, the target antenna configuration solution is determined based on channel measurement information obtained when signal transmission is performed based on each of the plurality of antenna configuration solutions.

Alternatively, when channel measurement information of each antenna configuration solution is obtained by traversing each antenna configuration solution, an optimal target antenna configuration solution may be filtered based on channel measurement information in each mapping relationship, to perform data transmission.

In some embodiments, step 501 and step 502 may be periodically performed, or a procedure of the antenna configuration method may be initiated when an environment in which the communication device is located changes.

In some embodiments, the channel measurement information includes measurement information related to a signal-to-noise ratio in a signal bandwidth with the bonding relationship.

In some embodiments, based on the example in step 501, when the transmit end receives a CQI fed back in each antenna configuration solution, the target antenna configuration solution finally filtered by the transmit end may be determined based on a minimum average signal-to-noise ratio in average signal-to-noise ratios respectively corresponding to a plurality of space-time streams sent on a plurality of subbands and an average value of the average signal-to-noise ratios respectively corresponding to the plurality of space-time streams sent on the plurality of subbands in each of the plurality of antenna configuration solutions.

A larger signal-to-noise ratio value may indicate better signal quality, and is more favorable for the receive end to perform data demodulation. For example, a filtering condition may be preconfigured in the transmit end. An antenna configuration solution that meets the antenna configuration condition is used as a final target antenna configuration solution based on whether the minimum average signal-to-noise ratio and the average value of the average signal-to-noise ratios that are corresponding to each antenna configuration solution and that are obtained through calculation meet the filtering condition. A specific filtering process is described below.

Although the foregoing uses an example in which the transmit end traverses the antenna configuration solutions and determines, based on channel measurement information received in each antenna configuration solution, the target antenna configuration solution, in some embodiments, the receive end may further traverse the antenna configuration solutions, and the receive end determines the target antenna configuration solution based on the channel measurement information in each antenna configuration solution. Details are described below.

In this way, in this embodiment of this application, for a multi-antenna system, antenna configuration solutions between an antenna and signals transmitted on a bonded channel may be traversed, signal measurement and transmission may be performed in a plurality of antenna configuration solutions, and an optimal target antenna configuration solution may be determined based on channel measurement information in each antenna configuration solution. In the prior art, when a mapping relationship between a plurality of antennas and signals transmitted on a bonded channel is fixed, if a high frequency signal and a low frequency signal happen to be at a location with severe fading on a channel, power of a received signal is reduced, and consequently, throughput performance of the multi-antenna system is reduced. In comparison with the prior art, in this application, a plurality of antenna configuration solutions may be filtered based on the channel measurement information, to determine an optimal target antenna configuration solution between an antenna and a channel, thereby improving the throughput performance of the multi-antenna system.

In some embodiments, for a possible implementation in which the transmit end traverses the plurality of antenna configuration solutions and filters the target antenna configuration solution based on the channel measurement information in each antenna configuration solution, refer to the following description.

For example, as described above, a transmit end serving as a beamformer may determine a final target antenna configuration solution based on an average signal-to-noise ratio that corresponds to each space-time stream sent on each subband and that is fed back by a receive end serving as a beamformee in the CQI. For an $n^{th}$ antenna configuration solution traversed by the transmit end, the channel measurement information carried in the CQI may be shown in the first column in Table 1.

Table 1 CQI report

| Average SNR of RU index k for space-time stream i | $AvgSNR_{k,i}$ (dB) |
| --- | --- |
| -32 | $\leq$-10 |
| -31 | -9 |
| -30 | -8 |
| ... | ... |
| 30 | 52 |
| 31 | $\geq$53 |

An entry Average SNR of RU index k for space-time stream i in the first column in Table 1 indicates an index of an average signal-to-noise ratio of an $i^{th}$ space-time stream in a subband k. Each subband k includes an RU including a plurality of subcarriers. An entry $AvgSNR_{k,i}$ in the second column also indicates an index of an actual value of the average signal-to-noise ratio of the $i^{th}$ space-time stream in the subband k. Because $AvgSNR_{k,i}$ is fed back by an HE beamformee to an HE beamformer by using signaling (that is, compressed beamforming/CQI), the HE beamformee needs to encode $AvgSNR_{k,i}$ before transmission. When receiving the CQI, the HE beamformer needs to decode the received signaling, to obtain content in the first column. In other words, after parsing the CQI, the HE beamformer obtains an average signal-to-noise ratio corresponding to each space-time stream i sent in each subband k. k and i are integers.

Then, a process in which the HE beamformer filters an antenna configuration solution based on the CQI received each time through traversal may be as follows.

　　(1) The HE beamformer may first convert an average signal-to-noise ratio that is of each space-time stream of each subband and that is fed back by the HE beamformee into a linear value. A mapping relationship of an $n^{th}$ traversal is used as an example. n is an integer. An average signal-to-noise ratio $AvgSNR_{n,k,i}$ (dB) that is of an $i^{th}$ stream of a $k^{th}$ subband and that is fed back by the HE beamformee is converted into a linear value $AvgSNR_{n,k,i}$ (lin). $AvgSNR_{n,k,i}$ (lin) may be represented as follows:

$$AvgSNR_{n,k,i}\,(lin)=10^{\frac{AvgSNR_{n,k,j}(dB)}{10}}.$$

It is assumed that the $k^{th}$ subband includes 26 subcarriers, and each subcarrier includes two space-time streams. For each space-time stream i, an average value of signal-to-noise ratios of the space-time stream i transmitted on the 26 subcarriers may be obtained, to obtain the average signal-to-noise ratio $AvgSNR_{n,k,i}$ (dB) of the $i^{th}$ stream, and $AvgSNR_{n,k,i}$ (dB) is converted into the linear value $AvgSNR_{n,k,i}$ (lin).

(2) The HE beamformer determines, based on the average signal-to-noise ratio of each space-time stream of each subband, a minimum average signal-to-noise ratio $minAvgSNR_n$ (dB) in an antenna configuration solution of each traversal. $minAvgSNR_n$ (dB) may be represented as follows:

$$minAvgSNR_n\,(dB)=min_{k,i}(AvgSNR_{n,k,i}\,(dB)).$$

(3) The HE beamformer calculates an average value of average signal-to-noise ratios respectively corresponding to a plurality of space-time streams sent on a plurality of subbands in an $n^{th}$ traversal, where the average value may be referred to as a total average signal-to-noise ratio $AvgSNR_n$ (dB), and $AvgSNR_n$ (dB) may be represented as follows:

$$AvgSNR_n\,(dB)=10\log 10\left(\frac{\sum_{k,i}AvgSNR_{n,k,i}(lin)}{N_{st}\times N_{sub}}\right).$$

$N_{st}$ represents a quantity of space-time streams transmitted on each subcarrier, and $N_{sub}$ represents a quantity of subbands of a bandwidth of a bonded channel.

It is assumed that there are N antenna configuration solutions, and N traversals are required. After total average signal-to-noise ratios of each of the N traversals are obtained, the total average signal-to-noise ratios of each traversal are sorted, for example, sorted in descending order, to obtain a sorting result of the total average signal-to-noise ratios.

Based on the sorting result of the total average signal-to-noise ratios, condition determining may be performed in descending order based on the total average signal-to-noise ratio and the minimum average signal-to-noise ratio obtained through each traversal, the preset average signal-to-noise ratio threshold avg_snr_threshold, and the preset minimum total average signal-to-noise ratio threshold min_snr_threshold. An antenna configuration solution that first meets an antenna configuration condition is used as a target antenna configuration solution that needs to be finally obtained through filtering.

For example, it is assumed that the total average signal-to-noise ratio and the minimum average signal-to-noise ratio obtained through the $n^{th}$ traversal are the first to meet the following two conditions, where meeting the two conditions may be represented as:

$$AvgSNR_n\,(dB)-minAvgSNR_n\,(dB)<avg\_snr\_threshold,$$

and

$$minAvgSNR_n\,(dB)>min\_snr\_threshold.$$

In this case, an antenna configuration solution obtained through the $n^{th}$ traversal may be used as the target antenna configuration solution that is finally obtained through filtering.

Certainly, the foregoing process of filtering the target antenna configuration solution is merely an example. A specific filtering calculation process may be in another manner. This is not limited in this application.

It should be understood that the specific example of the foregoing implementation is described by using an example in which the transmit end traverses the antenna configuration solutions, and the transmit end determines the target antenna configuration solution between the plurality of transmit antennas and the signal transmitted on the bonded channel. In some embodiments, the receive end may further filter the target antenna configuration solution between the plurality of receive antennas and the signal transmitted on the bonded channel.

If the receive end traverses antenna configuration solutions between receive antennas and high and low signalstransmitted on the bonded channel, the measurement signal may be a sounding frame. Transmitting the measurement signal by using the plurality of antenna configuration solutions in step 501 includes: receiving the sounding frame in each of the plurality of antenna configuration solutions, where the sounding frame is used to obtain the channel measurement information.

In step 502, before data transmission, for each traversed antenna configuration solution, the receive end may first obtain the channel measurement information of the received sounding frame through estimation, and then filter an optimal target antenna configuration solution based on the estimated channel measurement information.

In some embodiments, the channel measurement information includes measurement information related to at least one of a signal-to-noise ratio, a received signal strength, or an error vector magnitude.

In some embodiments, for each antenna configuration solution, the channel measurement information obtained by the receive end through estimation includes at least one of a signal-to-noise ratio corresponding to each of a plurality of space-time streams received by the plurality of antennas, a received signal strength (received signal strength indicator, RSSI) of each of the plurality of antennas, and an error vector magnitude (error vector magnitude, EVM) corresponding to each space-time stream of each subcarrier in each of a plurality of symbols in the received sounding frame.

A higher received signal strength indicates better signal quality, and is more favorable for the receive end to perform data demodulation. The error vector magnitude represents a distance between a data demodulation vector result and a theoretical constellation point, and is an important indicator for measuring a data demodulation capability. A smaller error vector magnitude indicates better signal quality, and is more favorable for the receive end to perform data demodulation.

In some embodiments, the receive end may further estimate a condition number (condition number, CN) based on the sounding frame received each time, and obtain an optimal mapping combination through filtering based on the condition number. The condition number is usually used to measure sensitivity of an output of matrix multiplication or inversion to an input error. A larger condition number indicates poorer sensitivity. In this application, if a value of the condition number obtained by the receive end through estimation is larger, it indicates that channel correlation is higher. For a MIMO system, this is less favorable for MIMO data demodulation.

In some embodiments, if each traversal is performed, the receive end obtains, through estimation, signal-to-noise ratios respectively corresponding to the plurality of space-time streams received by the plurality of antennas in the antenna configuration solution, the target antenna configuration solution finally obtained through filtering is determined based on a minimum signal-to-noise ratio in the signal-to-noise ratios respectively corresponding to the plurality of space-time streams received by the plurality of antennas and an average value of the signal-to-noise ratios respectively corresponding to the plurality of space-time streams received by the plurality of antennas in each antenna configuration solution that are obtained based on the received sounding frame in each of the plurality of antenna configuration solutions. In this case, the sounding frame may include a null data packet or a data packet.

For example, in a Wi-Fi scenario, for the $n^{th}$ traversal, the receive end may obtain, through estimation based on a received Wi-Fi frame, a signal-to-noise ratio of each space-time stream of each antenna, where the signal-to-noise ratio is denoted as $SNR_{m, i}$, and a value of m may be 1, 2, ..., $N_{ant}$. $N_{ant}$ represents a quantity of antennas at the receive end, and i represents an index of a space-time stream. For example, a value of i may be 1, 2, ..., or $N_{st}$. Similar to the foregoing process in which the HE beamformer filters the target antenna configuration solution based on the CQI received in each traversal, the receiver may determine the average value of signal-to-noise ratios respectively corresponding to the plurality of space-time streams received by the plurality of antennas, that is, the total average value of the signal-to-noise ratios, which is denoted as $AvgSNR_n$ (dB). Then, after the total average value of the signal-to-noise ratios obtained through each traversal is sorted, condition determining may be performed based on two preset thresholds, and a first mapping relationship that meets a condition after sorting is used as the optimal target antenna configuration solution.

In some embodiments, if the receive end estimates received signal strengths respectively received by the plurality of antennas in the antenna configuration solution during each traversal, the target antenna configuration solution is determined based on a minimum received signal strength in received signal strengths respectively corresponding to the plurality of antennas and an average value of the received signal strengths respectively corresponding to the plurality of antennas in each antenna configuration solution that are obtained based on the received sounding frame in each of the plurality of antenna configuration solutions. A specific filtering process may be similar to a process of performing mapping and combination based on the signal-to-noise ratios respectively corresponding to the plurality of space-time streams received by the plurality of antennas. Condition determining is performed by using the two preset thresholds, and the first antenna configuration solution that meets the antenna configuration condition after sorting is used as the optimal target antenna configuration solution. In this case, the sounding frame may include a null data packet or a data packet.

In some embodiments, if each traversal is performed, the receive end obtains, through estimation, error vector magnitudes respectively corresponding to the plurality of space-time streams that respectively correspond to the plurality of subcarriers of the plurality of antennas in the plurality of symbols in the antenna configuration solution, the target antenna configuration solution is determined based on a maximum error vector magnitude in error vector magnitudes respectively corresponding to a plurality of space-time streams respectively corresponding to a plurality of subcarriers in the plurality of symbols and an average value of the error vector magnitudes respectively corresponding to the plurality of space-time streams in each antenna configuration solution that are obtained based on the received sounding frame in each of the plurality of antenna configuration solutions. In this case, the sounding frame includes the data packet, or the sounding frame is a data frame.

The following uses an example in which the receive end screens the target antenna configuration solution based on the error vector magnitude corresponding to each space-time stream of each subcarrier in each symbol in each antenna configuration solution to describe the filtering process. The filtering process may include the following procedure.

(1) When receiving the data packet in the antenna configuration solution in the $n^{th}$ traversal, the receive end may first calculate, based on the received null data packet, an error vector magnitude $EVM_{s,c,i}$ (dB) corresponding to each space-time stream of each subcarrier in each symbol, and denote the error vector magnitude (dB) as $EVM_{n,s,c,i}$ (dB). As described above, a plurality of space-time streams may be transmitted on each subcarrier. Herein, s represents an index of the data symbol, a value of s may be 1, 2,..., or $N_{sym}$, and $N_{sym}$ represents a quantity of data symbols. c represents an index of the index, a value of c may be 1, 2,..., or $N_{subcarrier}$, and $N_{subcarrier}$ represents a quantity of subcarriers in one data symbol. i represents an index of the space-time stream, a value of i may be 1, 2,..., or $N_{st}$, and $N_{st}$ represents a quantity of space-time streams transmitted on each subcarrier.

(2) The receive end calculates an average error vector magnitude $AvgEVM_{n,i}$ (dB) of an $i^{th}$ space-time stream in the antenna configuration solution in the $n^{th}$ traversal. $AvgEVM_{n,i}$ (dB) may be represented as:

$$AvgEVM_{n,i}\ (dB) = \frac{\sum_{s,c} EVM_{n,s,c,i}(dB)}{N_{sym} \times N_{subcarrier}}.$$ This is equivalent to that the average error vector magnitude of each space-time stream is the average value of error vector magnitudes of each space-time stream transmitted on the plurality of subcarriers in all symbols.

(3) The receive end determines a maximum error vector magnitude $maxAvgEVM_n$ (dB) in error vector magnitudes corresponding to the plurality of space-time streams respectively corresponding to the plurality of antennas on the plurality of subcarriers in the antenna configuration solution in the $n^{th}$ traversal. $maxAvgEVM_n$ (dB) may be represented as:

$$maxAvgEVM_n\ (dB) = max_i(AvgEVM_{n,i}(dB)).$$

(4) The receive end calculates the average value of error vector magnitudes corresponding to the plurality of space-time streams in the antenna configuration solution obtained in the $n^{th}$ traversal, and denotes the average value as a total average error vector magnitude $AvgEVM_n$ (dB). $AvgEVM_n$ (dB) may be represented as:

$$AvgEVM_n\ (dB) = \frac{\sum_i AvgEVM_{n,i}(dB)}{N_{st} \times N_{sym}}.$$

When the total average error vector magnitudes corresponding to the plurality of antenna configuration solutions are obtained based on the antenna configuration solution in the $n^{th}$ traversal, the total average error vector magnitudes corresponding to the plurality of antenna configuration solutions may be sorted in ascending order.

Then, starting from a smallest value, the total average error vector magnitude and the maximum error vector magnitude obtained in each traversal are compared with a preset total average error vector magnitude threshold avg_evm_threshold and a preset maximum error vector magnitude threshold max_evm_threshold. An antenna configuration solution that first meets the antenna configuration condition is used as the target antenna configuration solution to be obtained through filtering.

For example, it is assumed that the total average error vector magnitude and the maximum error vector magnitude obtained in the $n^{th}$ traversal are the first to meet the two conditions. Meeting the two conditions may be represented as follows:

$$maxAvgEVM_n\ (dB) - Avg\ EVM_n\ (dB) < avg\_evm\_threshold,$$

and

$$maxAvg\ EVM_n\ (dB) < max\_evm\_threshold.$$

In this case, the antenna configuration solution obtained through the $n^{th}$ traversal may be used as the target antenna configuration solution that is finally obtained through filtering.

Certainly, the foregoing process of filtering the target antenna configuration solution is merely an example. A specific filtering calculation process may be in another manner. This is not limited in this application.

Due to channel reciprocity, the transmit end may also obtain corresponding channel measurement information, for example, the signal-to-noise ratio, the received signal strength indicator, the condition number, or the error vector magnitude, by historically receiving a peer signal as a receiver, and obtain the optimal target antenna configuration solution between the antenna and the signal transmitted on the bonded channel through filtering.

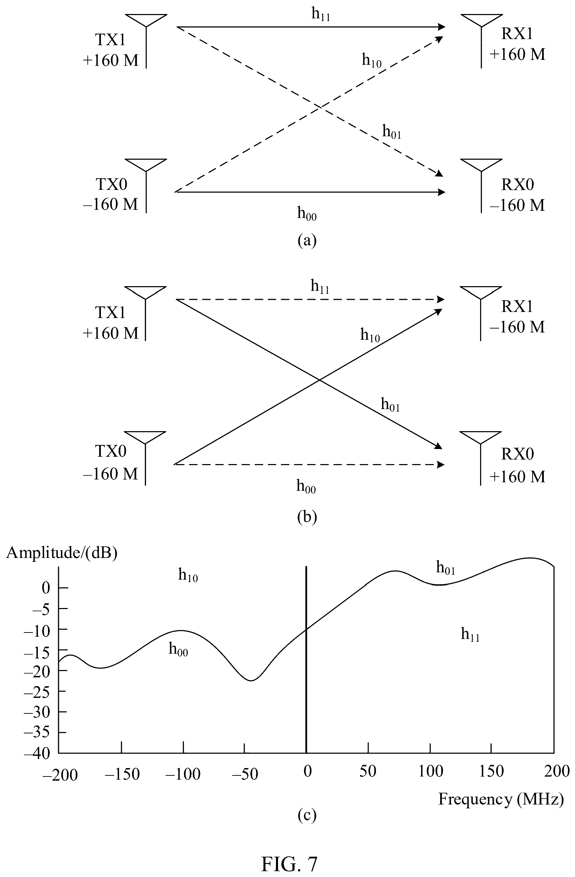

To compare effect of obtaining the optimal target antenna configuration solution and the optimal antenna configuration solution by traversing the antenna configuration solutions between the antenna and signals transmitted on the bonded channel in a bonded channel scenario, it is assumed that the antenna configuration solutions are traversed/switched by using two antennas of the receive end. An antenna configuration solution that is not the optimal solution in a traversal process of the receive end may be shown in (a) in FIG. 7. A receive antenna RX1 of the receive end receives a high frequency +160 signal, a transmission channel between the receive antenna RX1 and a transmit antenna TX1 is denoted as a channel h11, a receive antenna RX0 of the receive end receives a low frequency -160 signal, and a transmission channel between the receive antenna RX0 and the transmit antenna TX0 is denoted as a channel h00. The optimal target antenna configuration solution finally determined by the receiver may be shown in (b) in FIG. 7. The receive antenna RX1 at the receive end receives the low frequency -160 signal, a transmission channel between the receive antenna RX1 and the transmit antenna TX0 is denoted as a channel h10, the receive antenna RX0 at the receive end receives the high frequency +160 signal, and a transmission channel between the receive antenna RX0 and the transmit antenna TX1 is denoted as h01.

In contrast, refer to a diagram of a channel frequency domain response magnitude shown in (c) in FIG. 7, a horizontal axis represents a frequency (unit: MHz), and a vertical axis represents a frequency domain amplitude (amplitude), where a unit is dB. It can be learned that an amplitude of the channel h10 is greater than an amplitude of the channel h00, and an amplitude of the channel h01 is greater than an amplitude of the channel h11. In this way, compared with the antenna configuration solution in (a) in FIG. 7, in the antenna configuration solution in (b) in FIG. 7, a strength of the high frequency +160 signal and the low frequency -160 signal received by the receive end are greater than a strength of the high frequency +160 signal and the low frequency - 160 signal received by the receive end in the antenna configuration solution in (a) in FIG. 7.

The following describes, by using an example, how to traverse antenna configuration solutions between a physical antenna and signals transmitted on a bonded channel in this application.

In some embodiments, an antenna configuration solution may be switched in a circuit line control manner, that is, a high level and a low level control manner.

In some embodiments, an antenna configuration solution may be switched by configuring a center frequency of a local oscillator (local oscillator, LO) in a digital configuration transceiver, or by configuring a center frequency of the LO in the transceiver in a circuit line control manner.

For ease of description of a switching manner in this application, frameworks of a transmit end and a receive end are first described.

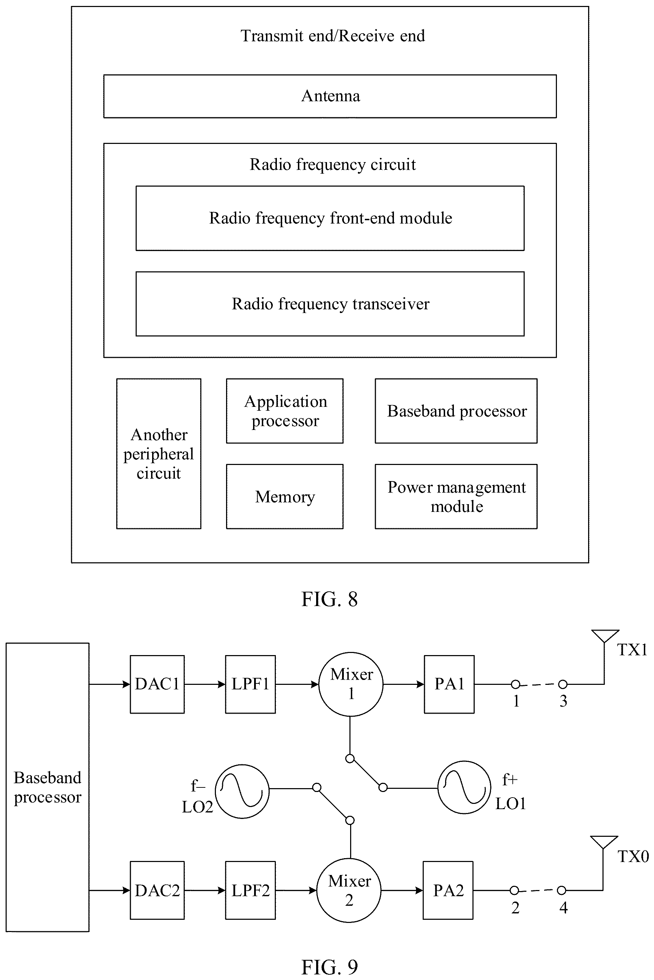

Regardless of the transmit end or the receive end, FIG. 8 is a diagram of a structure of a transmit end/receive end. The transmit end/receive end may include a baseband processor (baseband processor, BP), a radio frequency transceiver (transceiver), a radio frequency front-end (radio frequency front-end, RFFE) module, a plurality of antennas, and the like, and may further include an application processor (application processor, AP), a memory, a power management module, another peripheral circuit (for example, for a terminal device, the another peripheral circuit may further include an audio module, a display module, and a camera module), and the like.

The radio frequency transceiver may also be referred to as a radio frequency integrated circuit (radio frequency integrated circuit, RFIC). The radio frequency integrated circuit may be understood as a radio frequency transceiver semiconductor, and may include one logical area and one analog circuit area. The radio frequency transceiver can convert a digital signal from a modem (modem) chip (baseband processor) into an analog signal, convert the analog signal into a signal at a radio frequency that can be used by a user, and then send the signal by using a radio frequency front-end module and the antenna. In addition, the radio frequency transceiver can convert an external signal received by the radio frequency front-end module into a digital signal, and transmit the digital signal to the modem chip. The radio frequency front-end module is a component between the baseband processor and the antenna, and may convert a binary signal into a high frequency radio electromagnetic wave signal in a signal transmission process, and convert a received electromagnetic wave signal into a binary digital signal in a signal receiving process. The radio frequency front-end module may usually include components such as a power amplifier (power amplifier, PA), a filter, a duplexer, a radio frequency switch, and a low noise amplifier. The baseband processor may be understood as a wireless modem, and may be configured to synthesize a baseband signal to be transmitted, or decode a received baseband signal.

For example, for the transmit end, FIG. 9 is a diagram of traversing antenna configuration solutions between a two-antenna transmit end and signals transmitted on two bonded channels. A radio frequency transceiver in the transmit end may include a digital to analog converter (digital to analog converter, DAC), and a radio frequency front end may include a low-pass filter (low-pass filter, LPF), a local oscillator (LO), a mixer (mixer), and a PA. After a baseband processor in the transmit end generates a digital signal and transmits the digital signal to the DAC, the DAC converts the digital signal into an analog signal through digital to analog conversion. The analog signal is shifted to a center frequency of a corresponding channel through the mixer after passing through the LPF. The signal output by the mixer is amplified by the PA, and then transmitted by a transmit antenna TX.

Although FIG. 9 shows two transmit antennas, there may be more than two antennas. Herein, two antennas are used as an example for description.

Based on a partial structure of the transmit end shown in FIG. 9, for example, signals transmitted on the bonded channel are a high frequency signal f+ and a low frequency signal f-(for example, a high frequency +160 signal and a low frequency -160 signal). An antenna configuration solution between two antennas and the high frequency signal and the low frequency signal may be switched in the circuit line control manner. The circuit line control manner is used to control a conduction relationship of coupling points 1 to 4. The coupling point 1 and the coupling point 3 are located between a PA 1 and a transmit antenna TX 1, and the coupling point 2 and the coupling point 4 are located between a PA 2 and a transmit antenna TX 0. A mixer 1 is coupled to an LO1 that generates the high frequency signal f+, and a mixer 2 is coupled to an LO2 that generates the low frequency signal f-. The coupling points 1 to 4 may be located in a chip of the radio frequency front end, or may be located between the chip of the radio frequency front end and an antenna. This is not limited in this application.

It should be noted that, in this embodiment of this application, the antenna configuration solution between the antenna and the signals transmitted on the bonded channel is described by using a conduction relationship of a coupling point. In actual implementation, there is no execution action of conduction or non-conduction between coupling points. In other words, in actual implementation, there is no coupling point on a line. If the circuit line control manner is used, the antenna configuration solution may be switched by using a high level or a low level received by the line. For example, if a line between coupling points receives the high level, a line between the PA and the antenna is conducted, and if a line between coupling points receives the low level, a line between the PA and the antenna is not conducted.

When the transmit end traverses the antenna configuration solutions, for example, the transmit end may first conduct the coupling point 1 and the coupling point 3 in the circuit line control manner, and conduct the coupling point 2 and the coupling point 4, so that the transmit antenna TX1 transmits the high frequency signal f+ (for example, a null data packet), and the transmit antenna TX0 transmits the low frequency signal f- (for example, a null data packet). Then, the transmit end may receive channel measurement information 1 in a current antenna configuration solution.

Then, the transmit end may switch an antenna configuration solution, and conduct the coupling point 1 and the coupling point 4 in the circuit line control manner, and conduct the coupling point 2 and the coupling point 3, so that the transmit antenna TX1 maps and transmits the low frequency signal f-, and the transmit antenna TX0 transmits the high frequency signal f+. Then, the transmit end may receive channel measurement information 2 in the current antenna configuration solution.

The transmit end then determines, based on the received channel measurement information 1 and channel measurement information 2, a better antenna configuration solution of the two antenna configuration solutions for transmitting the high frequency signal and the low frequency signal.

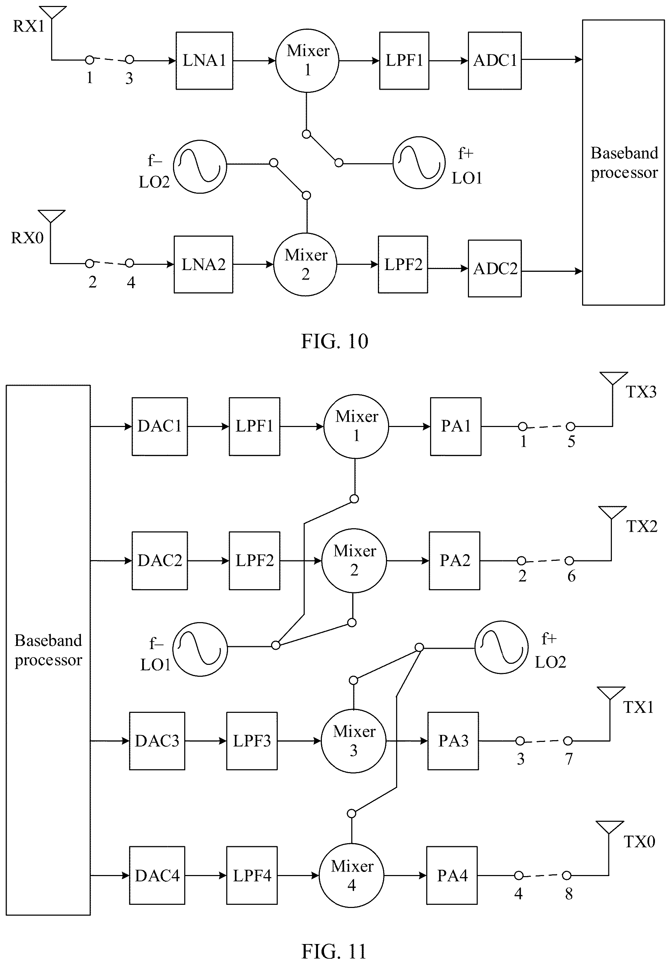

For example, for the receive end, FIG. 10 is a diagram of traversing antenna configuration solutions between a two-antenna receive end and signals transmitted on a bonded channel. A radio frequency transceiver in the receive end may include an analog to digital converter (analog to digital converter, ADC). A radio frequency front end may include an LPF, a local oscillator LO, a mixer, and a low noise amplifier (low noise amplifier, LNA). When the receive end receives an air interface analog signal through a receive antenna RX, the analog signal is amplified through the LNA, and then the analog signal is down-converted through a mixer and then transmitted to the ADC. The ADC converts the analog signal into a digital signal and outputs the digital signal to a baseband processor for processing.

Similar to FIG. 9, although FIG. 10 shows two receive antennas, there may be more than two antennas. Herein, two antennas are used as an example for description.

Based on a partial structure of the receive end shown in FIG. 10, for example, signals transmitted on the bonded channel are a high frequency signal f+ and a low frequency signal f-(for example, a high frequency +160 signal and a low frequency -160 signal). A mapping relationship between an antenna and the signal transmitted on the bonded channel may be switched in a circuit line control manner. The circuit line control manner is used to control a conduction relationship of coupling points 1 to 4. The coupling point 1 and the coupling point 3 are located between an LNA 1 and a receive antenna RX 1, and the coupling point 2 and the coupling point 4 are located between an LNA 2 and a receive antenna RX 0. A mixer 1 is coupled to an LO1 that generates the high frequency signal f+, and a mixer 2 is coupled to an LO2 that generates the low frequency signal f-. The coupling points 1 to 4 may be located in a chip of the radio frequency front end, or may be located between the chip of the radio frequency front end and an antenna. This is not limited in this application.

When the receive end traverses an antenna configuration solution, for example, the receive end may first connect the coupling point 1 and the coupling point 3 in the circuit line control manner, and connect the coupling point 2 and the coupling point 4, so that the receive antenna RX1 receives the high frequency signal f+ (for example, a null data packet), and the receive antenna RX0 receives the low frequency signal f- (for example, a null data packet). Then, the receive end may obtain channel measurement information 1 in the current antenna configuration solution through estimation based on the received data packet.

Then, the receive end may switch the antenna configuration solution, connect the coupling point 1 and the coupling point 4 in the circuit line control manner, and connect the coupling point 2 and the coupling point 3, so that the receive antenna RX1 receives the low frequency signal f-, and the receive antenna RX0 receives the high frequency signal f+. Then, the receive end may obtain channel measurement information 2 in the current antenna configuration solution through estimation based on the received data packet.

The receive end then determines, based on the channel measurement information 1 and the channel measurement information 2 obtained through estimation, a better antenna configuration solution of the two antenna configuration solutions for receiving the high frequency signal and the low frequency signal.

Similar to the two-antenna transmit end, the foregoing circuit line control manner may also be applicable to a four-antenna transmit end to implement an antenna configuration solution between a transmit antenna and the high frequency signal and the low frequency signal.

FIG. 11 is a diagram of traversing antenna configuration solutions between a four-antenna transmit end and signals transmitted on a bonded channel. For example, signals on two groups of bonded channels are respectively a high frequency signal f+ and a low frequency signal f- (for example, a high frequency +160 signal and a low frequency -160 signal). An antenna configuration solution between four antennas and a signal transmitted on the bonded channels may be switched in a circuit line control manner. The circuit line control manner is used to control a conduction relationship of coupling points 1 to 8. The coupling point 1 and the coupling point 5 are located between a PA 1 and a transmit antenna TX 3, the coupling point 2 and the coupling point 6 are located between a PA 2 and a transmit antenna TX 2, the coupling point 3 and the coupling point 7 are located between a PA 3 and a transmit antenna TX 1, and the coupling point 4 and the coupling point 8 are located between a PA 4 and a transmit antenna TX 0. Both a mixer 1 and a mixer 2 are coupled to an LO1 that generates the low frequency signal f-, and both a mixer 3 and a mixer 4 are coupled to an LO2 that generates the high frequency signal f+. The coupling points 1 to 8 may be located in a chip of the radio frequency front end, or may be located between the chip of the radio frequency front end and an antenna. This is not limited in this application.

In other words, for the four-antenna transmit end, every two radio frequency channels (channels) may reuse one LO1 corresponding to the low frequency signal or one LO2 corresponding to the high frequency signal. Alternatively, each radio frequency channel may use an independent LO. This is not limited in this application.

When the transmit end traverses the antenna configuration solutions, antenna configuration solutions between the four antennas and signals transmitted on the bonded channel traversed in the circuit line control manner by using a circuit is shown in Table 2.

Table 2 Antenna configuration solutions between four antennas at a transmit end and signals transmitted on a bonded channel

| Conduction (connection) manner between coupling points | TX0 | TX1 | TX2 | TX3 |
|---|---|---|---|---|
| 1-5,2-6,3-7,4-8 | High frequency signal | High frequency signal | Low frequency signal | Low frequency signal |
| 1-5,2-7,3-6,4-8 | High frequency signal | Low frequency signal | High frequency signal | Low frequency signal |
| 1-5,2-8,3-6,4-7 | Low frequency signal | High frequency signal | High frequency signal | Low frequency signal |
| 1-7,2-6,3-5,4-8 | High frequency signal | Low frequency signal | Low frequency signal | High frequency signal |
| 1-8,2-6,3-5,4-7 | Low frequency signal | High frequency signal | Low frequency signal | High frequency signal |
| 1-7,2-8,3-5,4-6 | Low frequency signal | Low frequency signal | High frequency signal | High frequency signal |

When the four-antenna transmit end traverses the six antenna configuration solutions in Table 2, the transmit end may receive channel measurement information in an antenna configuration solution in each antenna configuration solution. When receiving the channel measurement information in the six antenna configuration solutions, the transmit end may perform calculation based on the channel measurement information in the six antenna configuration solutions, to determine an optimal target antenna configuration solution for signal transmission.

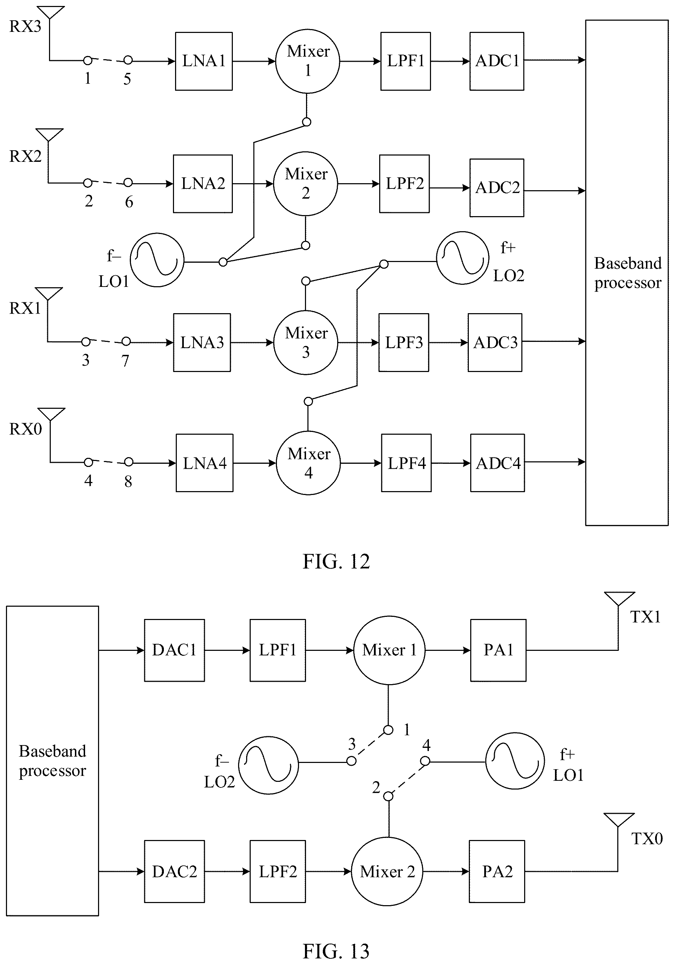

FIG. 12 is a diagram of traversing antenna configuration solutions between a four-antenna receive end and signals transmitted on a bonded channel. For example, signals on two groups of bonded channels are respectively a high frequency signal f+ and a low frequency signal f- (for example, a high frequency +160 signal and a low frequency -160 signal). An antenna configuration solution between four antennas and a signal transmitted on the bonded channels may be switched in a circuit line control manner. The circuit line control manner is used to control a conduction relationship of coupling points 1 to 8. The coupling point 1 and the coupling point 5 are located between an LNA 1 and a receive antenna RX 3, the coupling point 2 and the coupling point 6 are located between an LNA 2 and a receive antenna RX 2, the coupling point 3 and the coupling point 7 are located between an LNA 3 and a receive antenna RX 1, and the coupling point 4 and the coupling point 8 are located between an LNA 4 and a receive antenna RX 0. Both a mixer 1 and a mixer 2 are coupled to an LO1 that generates the low frequency signal f-, and both a mixer 3 and a mixer 4 are coupled to an LO2 that generates the high frequency signal f+. The coupling points 1 to 8 may be located in a chip of the radio frequency front end, or may be located between the chip of the radio frequency front end and an antenna. This is not limited in this application.

In other words, for the four-antenna receive end, every two radio frequency channels (channels) may reuse one LO corresponding to the high frequency signal or the low frequency signal. Alternatively, each radio frequency channel may use an independent LO. This is not limited in this application.

Similar to the four-antenna transmit end, when the receive end traverses the antenna configuration solutions, antenna configuration solutions between the four antennas and signals transmitted on the bonded channel traversed in the circuit line control manner by using a circuit is shown in Table 2. When the four-antenna receive end traverses the six antenna configuration solutions in Table 2, for each antenna configuration solution, the receive end may obtain the channel measurement information in the antenna configuration solution based on an estimated received data packet. When the receive end obtains the channel measurement information in the six antenna configuration solutions, the receive end may perform calculation based on the channel measurement information in the six antenna configuration solutions, to determine an optimal target antenna configuration solution for signal reception.

As described above, in this application, a center frequency of a mixer in the transceiver may be configured in a digital configuration manner or a circuit line control manner, to implement switching of the antenna configuration solution of the antenna and the signal transmitted on the bonded channel.

For example, for the transmit end, FIG. 13 is a diagram of traversing antenna configuration solutions between a two-antenna transmit end and signals transmitted on a bonded channel. The transmit end may switch a conduction relationship between a mixer 1 and an LO1 and an LO2, and a conduction relationship between a mixer 2 and the LO1 and the LO2, to implement switching of an antenna configuration solution of the two-antenna transmit end.

For example, when traversing the antenna configuration solution, the transmit end may first conduct a coupling point 1 and a coupling point 3 and conduct a coupling point 2 and the coupling point 4 in a circuit line control manner or a digital configuration manner, so that the mixer 1 receives a low frequency signal f- of the LO2, and a center frequency of the mixer 1 is the low frequency signal f-. A transmit antenna TX1 transmits the low frequency signal f-, and the mixer 2 receives a high frequency signal f+ of the LO1, so that a center frequency of the mixer 2 is the high frequency signal f+, and a transmit antenna TX0 transmits the high frequency signal f+.

Then, the transmit end switches the antenna configuration solution, that is, conducts the coupling point 1 and the coupling point 4 and conducts the coupling point 2 and the coupling point 3 in the digital configuration manner or the circuit line control manner, so that the center frequency of the mixer 1 is the high frequency signal f+, the transmit antenna TX1 transmits the high frequency signal f+, the center frequency of the mixer 2 is the low frequency signal f-, and the transmit antenna TX0 transmits the low frequency signal f-.

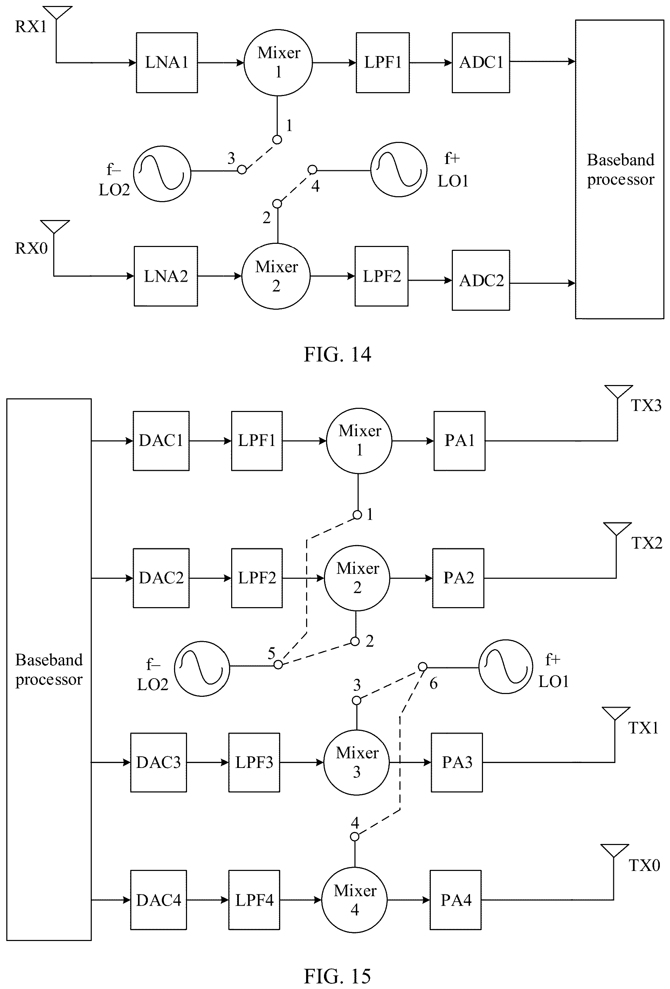

Similar to the transmit end, for the receive end, FIG. 14 is a diagram of traversing antenna configuration solutions between a two-antenna receive end and signals transmitted on a bonded channel. The receive end may switch a conduction relationship between a mixer 1 and an LO1 and an LO2, and a conduction relationship between a mixer 2 and the LO1 and the LO2, to implement switching of the antenna configuration solution of the two-antenna receive end and the signal transmitted on the bonded channel.

For example, when traversing antenna configuration solutions, the receive end may first conduct a coupling point 1 and a coupling point 3 and conduct a coupling point 2 and the coupling point 4 in a circuit line control manner or a digital configuration manner, so that a center frequency of the mixer 1 is the low frequency signal f-, a receive antenna RX1 receives the low frequency signal f-, a center frequency of the mixer 2 is the high frequency signal f+, and a receive antenna RX0 receives the high frequency signal f+.

Then, the receive end switches the antenna configuration solution, that is, conducts the coupling point 1 and the coupling point 4 and conducts the coupling point 2 and the coupling point 3 in the digital configuration manner or the circuit line control manner, so that the center frequency of the mixer 1 is the high frequency signal f+, the receive antenna RX1 receives the high frequency signal f+, the center frequency of the mixer 2 is the low frequency signal f-, and the receive antenna RX0 receives the low frequency signal f-.

Similar to that the center frequency of the mixer in the transceiver is configured for the two-antenna transmit end in the digital configuration manner or the circuit line control manner, to implement switching of the antenna configuration solution, the center frequency of the mixer in the transceiver may also be configured for the four-antenna transmit end in the digital configuration manner or the circuit line control manner, to implement the antenna configuration solution.

For example, FIG. 15 is a switching diagram of traversing antenna configuration solutions of a four-antenna transmit end. Four mixers on four radio frequency channels of the transmit end each correspond to one coupling point, for example, coupling points 1 to 4 in FIG. 15. Two LOs in the transmit end, that is, an LO1 that generates a high frequency signal f+ and an LO2 that generates a low frequency signal f-, each correspond to one coupling point, for example, coupling points 5 and 6 in FIG. 15. The transmit end may switch a conduction relationship between a mixer 1, a mixer 2, a mixer 3, a mixer 4, and the coupling points of the LO1 and the LO2 to implement switching of the antenna configuration solution of the four-antenna transmit end. Every two channels reuse one LO1 corresponding to the high frequency signal or one LO2 corresponding to the low frequency signal, or each signal may use an independent LO. This is not limited in this application.

When the transmit end traverses the antenna configuration solution, the four-antenna antenna configuration solution traversed in the electrical circuit line control manner or the digital configuration manner may be shown in Table 3.

Table 3 Four-antenna antenna configuration solution of a transmit end

| Conduction (connection) manner between coupling points | TX0 | TX1 | TX2 | TX3 |
|---|---|---|---|---|
| 1-5, 2-5, 3-6, 4-6 | High frequency signal | High frequency signal | Low frequency signal | Low frequency signal |
| 1-5, 3-5, 2-6, 4-6 | High frequency signal | Low frequency signal | High frequency signal | Low frequency signal |
| 1-5, 4-5, 2-6, 3-6 | Low frequency signal | High frequency signal | High frequency signal | Low frequency signal |
| 2-5, 3-5, 1-6, 4-6 | High frequency signal | Low frequency signal | Low frequency signal | High frequency signal |
| 2-5, 4-5, 1-6, 3-6 | Low frequency signal | High frequency signal | Low frequency signal | High frequency signal |
| 3-5, 4-5, 1-6, 2-6 | Low frequency signal | Low frequency signal | High frequency signal | High frequency signal |

Similar to that the center frequency of the mixer in the transceiver is configured for the two-antenna receive end in the digital configuration manner or the circuit line control manner to implement switching of the antenna configuration solution of the antenna and the signal transmitted on the bonded channel, the center frequency of the mixer in the transceiver may also be configured for the four-antenna receive end in the digital configuration manner or the circuit line control manner to implement traversing of the antenna configuration solution.

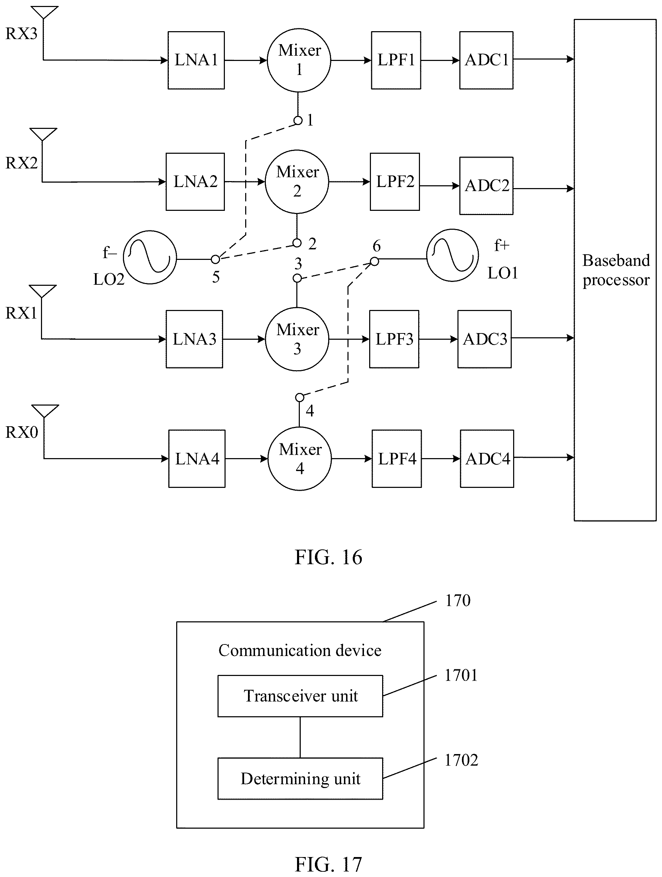

For example, FIG. 16 is a diagram of traversing antenna configuration solutions between a four-antenna receive end and signals transmitted on a bonded channel. Four mixers on four radio frequency channels of the receive end each correspond to one coupling point, for example, coupling points 1 to 4 in FIG. 16. Two LOs in the receive end, that is, an LO1 that generates a high frequency signal f+ and an LO2 that generates a low frequency signal f-, each correspond to one coupling point, for example, coupling points 5 and 6 in FIG. 16. The receive end may switch a conduction relationship between a mixer 1, a mixer 2, a mixer 3, a mixer 4, and the coupling points of the LO1 and the LO2, to implement switching of an antenna configuration solution of the four-antenna receive end. Every two channels reuse one LO1 corresponding to the high frequency channel or one LO2 corresponding to the low frequency channel, or each channel may use an independent LO. This is not limited in this application.

When the receive end traverses the antenna configuration solutions, a four-antenna antenna configuration solution traversed in the electrical circuit line control manner or the digital configuration manner may be shown in Table 3.

Certainly, this application may be further applied to a transmit end or a receive end with more than four antennas. Traversing of antenna configuration solutions between an antenna and signals transmitted on a bonded channel is similar to that of the transmit end and the receive end with two antennas and four antennas.

If the antenna configuration solution of switching the center frequency of the mixer in FIG. 13 to FIG. 16 is used, the plurality of coupling points used to switch the antenna configuration solution may be located in a chip of a radio frequency front end.

In this way, in this embodiment of this application, for a multi-antenna system, antenna configuration solutions between an antenna and signals transmitted on a bonded channel may be traversed, signal measurement and transmission may be performed in a plurality of antenna configuration solutions, and an optimal target antenna configuration solution may be determined based on channel measurement information in each antenna configuration solution. In the prior art, when a mapping relationship between a plurality of antennas and signals transmitted on a bonded channel is fixed, if a high frequency signal and a low frequency signal happen to be at a location with severe fading on a channel, power of a received signal is reduced, and consequently, throughput performance of the multi-antenna system is reduced. In comparison with the prior art, in this application, a plurality of antenna configuration solutions may be filtered based on the channel measurement information, to determine an optimal antenna configuration solution between an antenna and a signal transmitted on a bonded channel, thereby improving the throughput performance of the multi-antenna system.

In addition, for the transmit end or the receive end, in a MIMO application scenario, a space correlation feature of a channel in a fixed antenna configuration solution between an antenna and signals transmitted on a bonded channel is unchanged. If the space correlation feature of the channel in the current antenna configuration solution is large, and a degree of similarity between different antennas is high, MIMO receiving performance is reduced. If an optimal antenna configuration solution is determined by traversing the antenna configuration solutions in this application, an antenna configuration solution between an antenna and signals transmitted on a bonded channel in a MIMO scenario may be flexible and variable, and a problem of MIMO receiving performance reduction caused by the large spatial correlation feature between channels can be avoided.

It may be understood that, to implement the foregoing functions, the communication device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments. However, it should not be considered that the implementation goes beyond the scope of this application.

In this embodiment, the communication device may be divided into function modules based on the foregoing method examples. For example, each function module may be obtained through division based on each function, or two or more functions may be integrated into one processing module. The integrated module may be implemented in a form of hardware. It should be noted that module division in embodiments is an example and is merely logical function division. In practice, there may be another division manner.

When the function modules are obtained through division based on corresponding functions, FIG. 17 is a possible composition diagram of a communication device 170 in the foregoing embodiments. As shown in FIG. 17, the communication device 170 may include a transceiver unit 1701 and a determining unit 1702.

The transceiver unit 1701 may be configured to support the communication device 170 in performing step 501, step 502, and the like, and/or another process of the technology described in this specification.

The determining unit 1702 may be configured to support the communication device 170 in performing a process of how to determine the target antenna configuration solution in the description of step 502, and/or another process of the technology described in this specification.

It should be noted that all related content of the steps in the foregoing method embodiments may be cited in function description of corresponding functional modules. Details are not described herein again.

The communication device 170 provided in this embodiment is configured to perform the antenna configuration method, and therefore can achieve effect the same as that of the foregoing implementation method.

When an integrated unit is used, the communication device 170 may include a processing module, a storage module, and a communication module. The processing module may be configured to control and manage an action of the communication device 170. For example, the processing module may be configured to support the communication device 170 in performing the step performed by the determining unit 1702. The storage module may be configured to support the communication device 170 in storing program code, data, and the like. The communication module may be configured to support communication between the communication device 170 and another device. For example, the communication module may be configured to support the communication device 170 in performing the steps performed by the transceiver unit 1701.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another electronic device.

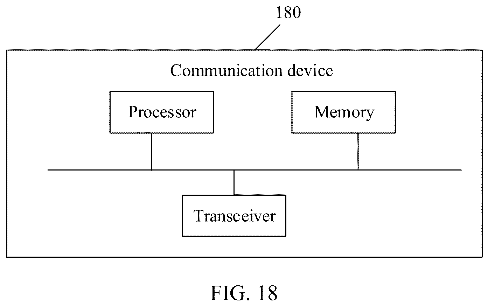

In an embodiment, when the processing module is a processor, the storage module is a memory, and the transceiver module is a transceiver, the electronic device in this embodiment may be a communication device 180 with a structure shown in FIG. 18.

An embodiment of this application further provides an electronic device, including one or more processors and one or more memories. The one or more memories are coupled to the one or more processors, and the one or more memories are configured to store computer program code. The computer program code includes computer instructions.

When the one or more processors execute the computer instructions, the electronic device is enabled to perform the related method steps, to implement the antenna configuration method in the foregoing embodiments.

Embodiments of this application further provide a computer storage medium. The computer storage medium stores computer instructions. When the computer instructions are run on an electronic device, the electronic device is enabled to perform the foregoing related method steps, to implement the antenna configuration method in the foregoing embodiments.

Embodiments of this application further provide a computer program product. When the computer program product runs on a computer, the computer is enabled to perform the foregoing related steps, to implement the antenna configuration method performed by the electronic device in the foregoing embodiments.

In addition, embodiments of this application further provide an apparatus. The apparatus may be specifically a chip, a component, or a module. The apparatus may include a processor and a memory that are connected. The memory is configured to store computerexecutable instructions. When the apparatus runs, the processor may execute the computerexecutable instructions stored in the memory, so that the chip performs the antenna configuration method performed by the electronic device in the foregoing method embodiments.

The electronic device, the computer storage medium, the computer program product, or the chip provided in embodiments is configured to perform the corresponding method provided above. Therefore, for beneficial effects that can be achieved, refer to beneficial effects of the corresponding method provided above. Details are not described herein again.

Another embodiment of this application provides a system. The system may include the transmit end and the receive end, and may be configured to implement the antenna configuration method.

Based on the descriptions of the implementations, a person skilled in the art may understand that for the purpose of convenient and brief description, division into the functional modules is merely used as an example for description. In actual application, the functions may be allocated to different functional modules for completion based on a requirement. In other words, an inner structure of an apparatus is divided into different functional modules, to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An antenna configuration method, wherein the method comprises:

respectively transmitting a measurement signal by using a plurality of antenna configuration solutions, wherein each antenna configuration solution is used to configure a signal transmitted by each of a plurality of antennas, and there is a bonding relationship between signals transmitted by the plurality of antennas; and

performing data transmission by using a target antenna configuration solution in which channel measurement information meets an antenna configuration condition in channel measurement information of the plurality of antenna configuration solutions.

2. The method according to claim 1, wherein the measurement signal is a null data packet, and respectively transmitting the measurement signal by using the plurality of antenna configuration solutions comprises:

sending the null data packet in each of the plurality of antenna configuration solutions, and receiving a channel quality indication sent by a receive end in each antenna configuration solution, wherein the null data packet is used to indicate the receive end to perform channel measurement; and for each antenna configuration solution, the channel quality indication comprises channel measurement information corresponding to each antenna configuration solution.

3. The method according to claim 2, wherein the channel measurement information comprises measurement information related to a signal-to-noise ratio in a signal bandwidth with the bonding relationship.

4. The method according to claim 3, wherein for each antenna configuration solution, the channel measurement information comprises an average signal-to-noise ratio corresponding to each space-time stream sent in each subband in the signal bandwidth with the bonding relationship, and for each space-time stream in any subband, the average signal-to-noise ratio corresponding to each space-time stream is an average value of signal-to-noise ratios of each space-time stream sent on a plurality of carriers in any subband.

5. The method according to claim 4, wherein the target antenna configuration solution is determined based on a minimum average signal-to-noise ratio in average signal-to-noise ratios respectively corresponding to a plurality of space-time streams sent on the plurality of subbands, and an average value of the average signal-to-noise ratios respectively corresponding to the plurality of space-time streams sent on the plurality of subbands in each of the plurality of antenna configuration solutions.

6. The method according to claim 1, wherein the measurement signal is a sounding frame, and respectively transmitting the measurement signal by using the plurality of antenna configuration solutions comprises:
receiving the sounding frame in each of the plurality of antenna configuration solutions, wherein the sounding frame is used to obtain the channel measurement information.

7. The method according to claim 6, wherein the channel measurement information comprises measurement information related to at least one of a signal-to-noise ratio, a received signal strength, or an error vector magnitude.

8. The method according to claim 7, wherein for each antenna configuration solution, the channel measurement information comprises at least one of a signal-to-noise ratio corresponding to each of a plurality of space-time streams received by the plurality of antennas, a received signal strength of each of the plurality of antennas, and an error vector magnitude corresponding to each space-time stream on each subcarrier in each of a plurality of symbols of the received sounding frame.

9. The method according to claim 8, wherein the target antenna configuration solution is determined based on a minimum signal-to-noise ratio in the signal-to-noise ratios respectively corresponding to the plurality of space-time streams received by the plurality of antennas and an average value of the signal-to-noise ratios respectively corresponding to the plurality of space-time streams received by the plurality of antennas in each antenna configuration solution that are obtained based on the received sounding frame in each of the plurality of antenna configuration solutions.

10. The method according to claim 8, wherein the target antenna configuration solution is determined based on a minimum received signal strength in received signal strengths respectively corresponding to the plurality of antennas and an average value of the received signal strengths respectively corresponding to the plurality of antennas in each mapping relationship that are obtained based on the received sounding frame in each of the plurality of antenna configuration solutions.

11. The method according to claim 8, wherein the target antenna configuration solution is determined based on a maximum error vector magnitude in error vector magnitudes respectively corresponding to a plurality of space-time streams respectively corresponding to a plurality of subcarriers in the plurality of symbols and an average value of the error vector magnitudes respectively corresponding to the plurality of space-time streams in each antenna configuration solution that are obtained based on the received sounding frame in each of the plurality of antenna configuration solutions.

12. A communication apparatus, wherein the communication apparatus comprises:

   a transceiver unit, configured to: respectively transmit a measurement signal by using a plurality of antenna configuration solutions, wherein each antenna configuration solution is used to configure a signal transmitted by each of a plurality of antennas, and there is a bonding relationship between signals transmitted by the plurality of antennas; and
   perform data transmission by using a target antenna configuration solution in which channel measurement information meets an antenna configuration condition in channel measurement information of the plurality of antenna configuration solutions.

13. The communication apparatus according to claim 12, wherein the measurement signal is a null data packet, and the transceiver unit is configured to:

   send the null data packet in each of the plurality of antenna configuration solutions, and receive a channel quality indication sent by a receive end in each antenna configuration solution, wherein
   the null data packet is used to indicate the receive end to perform channel measurement; and
   for each antenna configuration solution, the channel quality indication comprises channel measurement information corresponding to each antenna configuration solution.

14. The communication apparatus according to claim 13, wherein the channel measurement information comprises measurement information related to a signal-to-noise ratio in a signal bandwidth with the bonding relationship.

15. The communication apparatus according to claim 14, wherein for each antenna configuration solution, the channel measurement information comprises an average signal-to-noise ratio corresponding to each space-time stream sent in each subband in the signal bandwidth with the bonding relationship, and for each space-time stream in any subband, the average signal-to-noise ratio corresponding to each space-time stream is an average value of signal-to-noise ratios of each space-time stream sent on a plurality of carriers in any subband.

16. The communication apparatus according to claim 12, wherein the measurement signal is a sounding frame, and the transceiver unit is configured to:
   receive the sounding frame in each of the plurality of antenna configuration solutions, wherein the sounding frame is used to obtain the channel measurement information.

17. The communication apparatus according to claim 16, wherein the channel measurement information comprises measurement information related to at least one of a signal-to-noise ratio, a received signal strength, or an error vector magnitude.

18. The communication apparatus according to claim 17, wherein for each antenna configuration solution, the channel measurement information comprises at least one of a signal-to-noise ratio corresponding to each of a plurality of space-time streams received by the plurality of antennas, a received signal strength of each of the plurality of antennas, and an error vector magnitude corresponding to each space-time stream on each subcarrier in each of a plurality of symbols of the received sounding frame.

19. A communication apparatus, wherein the communication apparatus comprises a plurality of antennas, a transceiver, and a processor, the plurality of antennas and the transceiver are coupled to the processor, and the processor is configured to control the transceiver to perform the method according to any one of claims 1 to 11 through the plurality of antennas.

20. A computer-readable storage medium, comprising computer instructions, wherein when the computer instructions are run on an electronic device, the electronic device is enabled to perform the method according to any one of claims 1 to 11.

Beamforming transmit end | VHT NDP announcement | NDP

Beamforming receive end | VHT compressed beam

FIG. 1(a)

Beamforming transmit end | VHT NDP announcement | NDP | Beamforming report request | Beamforming report request

Beamforming receive end 1 | VHT compressed beam

Beamforming receive end 2 | VHT compressed beam

Beamforming receive end 3 | VHT compressed beam

FIG. 1(b)

HE beamforming transmit end

HE NDP announcement

HE sounding NDP

HE beamforming receive end

HE compressed beam

**FIG. 1(c)**

HE beamforming transmit end

HE NDP announcement

HE sounding NDP

Beamforming report request trigger

HE beamforming receive end 1

HE compressed beam/CQI 1

HE beamforming receive end 2

HE compressed beam/CQI 2

HE beamforming receive end 3

HE compressed beam/CQI 3

**FIG. 1(d)**

FIG. 2

FIG. 3

FIG. 4

A communication device respectively transmits a measurement signal by using a plurality of antenna configuration solutions, where each antenna configuration solution is used to configure a signal transmitted by each of a plurality of antennas, and there is a bonding relationship between signals transmitted by the plurality of antennas    501

The communication device performs data transmission by using a target antenna configuration solution in which channel measurement information meets an antenna configuration condition in channel measurement information of the plurality of antenna configuration solutions    502

FIG. 5

TX1
+160 M

$h_{11}$

RX1
+160 M

$h_{10}$

$h_{01}$

TX0
−160 M

$h_{00}$

RX0
−160 M

(a)

TX1
−160 M

$h_{11}$

RX1
+160 M

$h_{10}$

$h_{01}$

TX0
+160 M

$h_{00}$

RX0
−160 M

(b)

FIG. 6

FIG. 7

Transmit end/Receive end

Antenna

Radio frequency circuit

Radio frequency front-end module

Radio frequency transceiver

Another peripheral circuit

Application processor

Baseband processor

Memory

Power management module

FIG. 8

Baseband processor

DAC1 → LPF1 → Mixer 1 → PA1 — 1 — 3 — TX1

f− LO2

f+ LO1

DAC2 → LPF2 → Mixer 2 → PA2 — 2 — 4 — TX0

FIG. 9

FIG. 10

FIG. 11

FIG. 12

FIG. 13

FIG. 14

FIG. 15

FIG. 16

FIG. 17

180

Communication device

| Processor | | Memory |

Transceiver

FIG. 18

## INTERNATIONAL SEARCH REPORT

| International application No. |
| --- |
| **PCT/CN2024/085359** |

| | |
| --- | --- |
| **A.** | **CLASSIFICATION OF SUBJECT MATTER** |
| | H04B7/06(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC：H04B

Documentation searched other than minimum documentation to the extent that such documents are included in the fields searched

Electronic data base consulted during the international search (name of data base and, where practicable, search terms used)

3GPP, CNTXT, CNKI, VEN, ENTXT, ENTXTC: 绑定, 遍历, 测量, 低频, 动态, 方案, 高频, 配置, 切换, 天线, 信道, 信道绑定, 信道质量, 信号, 信号质量, 信噪比, antenna, bonding, channel, CQI, EVM, RSSI, SNR, low frequency, high frequency

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 106165310 A (HUAWEI TECHNOLOGIES CO., LTD.) 23 November 2016 (2016-11-23) description, paragraphs [0018]-[0086] | 1-20 |
| A | CN 110830209 A (HUAWEI TECHNOLOGIES CO., LTD.) 21 February 2020 (2020-02-21) entire document | 1-20 |
| A | CN 112803971 A (QUALCOMM INC.) 14 May 2021 (2021-05-14) entire document | 1-20 |
| A | WO 2021159493 A1 (HUAWEI TECHNOLOGIES CO., LTD.) 19 August 2021 (2021-08-19) entire document | 1-20 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 June 2024** | **24 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/085359**

| Patent document cited in search report | | | Publication date (day/month/year) | Patent family member(s) | | | Publication date (day/month/year) |
|---|---|---|---|---|---|---|---|
| CN | 106165310 | A | 23 November 2016 | HK | 1231641 | A1 | 22 December 2017 |
| | | | | WO | 2015101343 | A1 | 09 July 2015 |
| | | | | EP | 3080926 | A1 | 19 October 2016 |
| | | | | EP | 3080926 | A4 | 14 December 2016 |
| | | | | EP | 3080926 | B1 | 24 July 2019 |
| | | | | US | 2015188599 | A1 | 02 July 2015 |
| | | | | US | 9100100 | B2 | 04 August 2015 |
| CN | 110830209 | A | 21 February 2020 | EP | 3806373 | A1 | 14 April 2021 |
| | | | | EP | 3806373 | A4 | 04 August 2021 |
| | | | | US | 2021153215 | A1 | 20 May 2021 |
| | | | | US | 11350425 | B2 | 31 May 2022 |
| | | | | US | 2022369321 | A1 | 17 November 2022 |
| | | | | WO | 2020030050 | A1 | 13 February 2020 |
| CN | 112803971 | A | 14 May 2021 | JP | 2019514238 | A | 30 May 2019 |
| | | | | JP | 6617204 | B2 | 11 December 2019 |
| | | | | US | 2017265224 | A1 | 14 September 2017 |
| | | | | US | 10321487 | B2 | 11 June 2019 |
| | | | | WO | 2017156370 | A2 | 14 September 2017 |
| | | | | WO | 2017156370 | A3 | 19 October 2017 |
| | | | | TW | 201735562 | A | 01 October 2017 |
| | | | | TWI | 692953 | B | 01 May 2020 |
| | | | | KR | 20180123491 | A | 16 November 2018 |
| | | | | KR | 102056820 | B1 | 17 December 2019 |
| | | | | EP | 3427407 | A2 | 16 January 2019 |
| | | | | EP | 3427407 | B1 | 24 February 2021 |
| | | | | BR | 112018068016 | A2 | 08 January 2019 |
| WO | 2021159493 | A1 | 19 August 2021 | US | 2023045308 | A1 | 09 February 2023 |
| | | | | EP | 4090063 | A1 | 16 November 2022 |
| | | | | EP | 4090063 | A4 | 11 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310498537